# EUROPÄISCHE PATENTSCHRIFT

(11) **EP 4 397 837 B1**
(45) Veröffentlichungstag und Bekanntmachung des Hinweises auf die Patenterteilung: **03.09.2025**
(21) Anmeldenummer: 24150147.7
(22) Anmeldetag: 03.01.2024
(51) Int. Cl.: E06C 7/00, G01C 9/10

(54) **ANSTELLMASSVORRICHTUNG ZUM KENNTLICHMACHEN EINES ANSTELLWINKELS, DAMIT AUSGESTATTETE LEITER SOWIE HERSTELLUNGSVERFAHREN UND VERWENDUNG**
AN ADJUSTMENT DEVICE FOR INDICATING A PITCH ANGLE, CONDUCTORS EQUIPPED THEREWITH, AND PRODUCTION METHOD AND USE
DISPOSITIF DE MESURE DE POSITION POUR RENDRE UN ANGLE D'ATTAQUE CARACTÉRISTIQUE, CONDUCTEURS AINSI ÉQUIPÉS, PROCÉDÉ DE FABRICATION ET UTILISATION

(30) Priorität: 07.01.2023 DE 202023000026 U
(43) Veröffentlichungstag der Anmeldung: 10.07.2024
(73) Patentinhaber: L3NZ Technology UG (haftungsbeschränkt), 45894 Gelsenkirchen NRW (DE)
(72) Erfinder: Drosdzol, Denis, 45894 Gelsenkirchen (DE)
(74) Vertreter: Tanner, Lukas

(56) Entgegenhaltungen:
- CN-U- 216 348 575
- GB-A- 2 388 868
- KR-A- 20180 070 989

## Beschreibung

### TECHNISCHES GEBIET

Die vorliegende Erfindung betrifft eine Anstellmaßvorrichtung insbesondere für anstellbare Leitern, zum Kenntlichmachen wenigstens eines Anstellwinkels insbesondere zwecks Soll-Ist-Abgleich. Ferner betrifft die vorliegende Erfindung eine entsprechend ausgestattete Leiter. Ferner betrifft die vorliegende Erfindung ein Verfahren zum Herstellen einer solchen Anstellmaßvorrichtung, insbesondere zwecks Bereitstellung der Anstellmaßvorrichtung als für Leitern nachrüstbares Bauteil. Nicht zuletzt betrifft die vorliegende Erfindung auch die Verwendung wenigstens einer solchen Anstellmaßvorrichtung für einen visuellen Soll-Ist-Abgleich durch einen Nutzer. Insbesondere betrifft die Erfindung Vorrichtungen und Verfahren gemäß dem Oberbegriff des jeweiligen unabhängigen Anspruchs.

### HINTERGRUND DER ERFINDUNG

Beim manuellen Errichten und Anstellen von Leitern z.B. an Gebäuden ist es von großer Bedeutung hinsichtlich Arbeitsschutz und dergleichen, einen vergleichsweise engen Anstellwinkelbereich einzuhalten, insbesondere zur Minimierung des Risikos, dass die jeweilige Leiter nach unten wegrutscht, nach hinten kippt, nach vorne zu große Last ausübt, seitlich verrutscht oder sogar seitlich umkippt. Erfahrungsgemäß ist es für die handhabenden Personen nicht nur im Privatbereich, sondern auch z.B. im Katastrophenschutz insbesondere stressbedingt unter Zeitdruck nicht immer einfach, den vorteilhaft sicheren Anstellwinkelbereich zu treffen bzw. nachzujustieren. Als sehr grobe Methode zur Überprüfung eines einzuhaltenden Anstellwinkelbereichs wird z.B. die Ellenbogenmethode gelehrt, welche jedoch ein Umpositionieren der Person erfordert, daher vermutlich auch oftmals einfach übergangen wird, und welche auch nur vergleichsweise grobe Genauigkeit liefert.

Gemäß dem Stand der Technik sind bereits Einrichtungen bekannt, mittels welchen eine Ausrichtung einer Leiter überprüft werden kann; derartige Einrichtungen sind jedoch entweder selbst bereits vergleichsweise aufwändig in der Handhabung oder eher nur im Zusammenhang mit motorisch verlagerbaren bzw. motorisch anstellbaren/ausrichtbaren Leitervorrichtungen implementierbar, dienen dann also dazu, einen Abgleich mit einer Steuerungseinrichtung für ein motorisches Ausrichten zu ermöglichen. Es besteht daher Interesse an einer verbesserten Kenntlichmachung wenigstens eines Anstellwinkelbereichs beim manuellen Handhaben insbesondere von Leitern, ohne dass dabei die Handhabung erschwert wird.

Die folgenden drei Veröffentlichungen beschreiben Anzeigeeinrichtungen zum Anzeigen von wenigstens einem Winkel: GB 2 388 868 A, KR 2018 0070989 A, CN 216 348 575 U.

### ZUSAMMENFASSUNG DER ERFINDUNG

Aufgabe ist, eine Vorrichtung zum Überprüfen zumindest eines momentan eingenommenen Anstellwinkels an einer manuell handhabbaren Leiter oder eines vergleichbaren Geräts bereitzustellen, mittels welcher zumindest der momentane Anstellwinkel und bevorzugt auch ein momentaner Lateralwinkel auf besonders ergonomische, leicht verständliche und robuste Weise kenntlich gemacht werden kann/können. Auch ist es Aufgabe, eine solche Vorrichtung derart auszugestalten, dass ein Aus-/Nachrüsten für bereits bestehende Leitern bzw. derlei Geräte möglichst problemlos realisiert werden kann. Nicht zuletzt ist es Aufgabe, eine solche Vorrichtung derart auszugestalten, dass die kenntlich zu machende Winkelinformation möglichst unabhängig von der Art und Weise der Handhabung und Nutzung der Leiter vergleichsweise einfach und schnell erfasst werden kann, insbesondere unabhängig von einer Kipprichtung bzw. unabhängig von einer gewählten Anstellrichtung der Leiter, insbesondere sowohl eine Anstellwinkelinformation als auch eine Lateralwinkelinformation.

Diese Aufgabe wird durch eine Anstellmaßvorrichtung gemäß Anspruch 1 sowie durch ein Verfahren gemäß dem nebengeordneten Verfahrensanspruch sowie durch Verwendungen gemäß den nebengeordneten Verwendungsansprüchen gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine Anstellmaßvorrichtung insbesondere für anstellbare Leitern. Erfindungsgemäß wird vorgeschlagen, dass die Anstellmaßvorrichtung zwei von außen visuell zugängliche Referenzkammern jeweils mit einer darin gavitationskraftgetrieben verlagerbaren Referenzkugel jeweils angeordnet/eingerichtet zum Kenntlichmachen zumindest eines Soll-Anstellwinkelbereichs aufweist, wobei die Anstellmaßvorrichtung eingerichtet ist, auf einer/der Leiter, insbesondere auf einem Holm einer/der Leiter, durch einen Verbundhilfsstoff oder durch Form-/Kraftschluss befestigt zu sein/werden oder in mit der Leiter, insbesondere mit dem Holm, integraler Ausgestaltung zumindest bezüglich der Längserstreckungsrichtung (x) der Leiter ausgerichtet bereitgestellt zu werden, nämlich jeweils in einer Ausrichtung orthogonal oder parallel zu einer (entsprechend für die Anordnung gewählten) Oberfläche der Leiter, wobei die Oberfläche eine plane/ebene Oberfläche ist, wobei die zwei Referenzkammern parallel zu der entsprechenden Oberfläche angeordnet sind. Dies ermöglicht unter anderem ein ergonomisch auch während der manuellen Handhabung der Leiter (bzw. eines entsprechenden Geräts) optimiertes Auslesen von (Anstell-)Winkelinformationen und gegebenenfalls auch ein schnelles intuitives Nachjustieren der Ausrichtung der Leiter zum Erreichen des korrekten/optimalen Anstellwinkels. Besonders vorteilhaft wirkt sich die Nutzung der hier beschriebenen Anstellmaßvorrichtung bei vergleichsweise hohen/langen Leitern im Bereich von 10m bis 14m aus (z.B. bei von der Feuerwehr oder anderen Katastrophenschutzinstitutionen eingesetzten Anlegeleitern hoher Sicherheitsstufe); dann nämlich wird ein unvorteilhafter Anstellwinkel besonders gefährlich. Indem nun die Anstellmaßvorrichtung gut ablesbar an der Leiter platziert ist und vor dem Besteigen der Leiter abgelesen wird, kann das Risiko eines Unfalls stark minimiert werden. Die Anstellmaßvorrichtung begünstigt dabei auch, ganz im Gegensatz zu andersartigen vorbekannten Winkelanzeigemitteln wie z.B. herkömmlichen Wasserwaagen, eine sehr klare Ja/Nein-Aussage auch in Situationen unter Stress bzw. Zeitdruck: Ist die Referenzkugel sichtbar, kann sicher davon ausgegangen werden, dass der (Anstell-)Winkel im korrekten Bereich liegt. Dabei kann die Anordnung der jeweiligen Anstellmaßvorrichtung am Holm z.B. auf einer lateralen Innenoberfläche und/oder lateralen Außenoberfläche vorgesehen sein, vorteilhaft in Sichthöhe/Stehhöhe, z.B. im Abstand von 1,3 bis 1,5 Metern zum jeweiligen Ende der Leiter, z.B. im Bereich der jeweils dritten oder vierten Sprosse. Eine Anordnung an einer Innenoberfläche liefert dabei eine noch höhere Sicherheit bzw. Robustheit, insbesondere bei minimiertem Risiko, dass die Vorrichtung durch äußere Einwirkung wie z.B. Fußtritte beschädigt oder gar abgerissen wird.

Dabei ist die Oberfläche eine plane/ebene Oberfläche, nämlich eine sich in einer lateralen Ebene oder in einer frontalen Ebene erstreckende Oberfläche.

Es ist zu verstehen, dass die Konzipierung und die Funktionsweise der hier beschriebenen Anstellmaßvorrichtung insbesondere unter Bezugnahme auf manuell handhabbare anstellbare Leitern erläutert wird; der Fachmann erkennt, dass die Verwendung der hier beschriebenen Anstellmaßvorrichtung auch für weitere in wenigstens einem Winkeln auszurichtende anstellbare Einrichtungen bzw. Geräte implementiert werden kann, insbesondere allgemein für gemäß einer schiefen Ebene ausgerichteten Leitern, beispielsweise für alle Arten von Anlegeleitern.

Als "anstellbare Leiter" ist insbesondere eine manuell handhabbare und manuell am jeweiligen Einsatzort anstellbare Leiter zu verstehen, insbesondere auch so genannte Anlegeleitern speziell auch für den Einsatz im Katastrophenschutz, insbesondere Anlegeleitern die sich über mindestens 10m erstrecken. Die vorliegende Erfindung zielt dabei ausgehend von diesem Anwendungsfeld auch allgemein auf eine Verbesserung der Nutzbarkeit von manuell zu handhabenden Leitern und dergleichen mit einer Neigung auszustellenden bzw. anzulehnenden Geräte ab, und ist auch insoweit nicht nur auf Leitern bzw. auf bestimmte Leitertypen beschränkt.

Als "Oberfläche der Leiter" bzw. "Oberfläche des Holms" (sinngemäß: Oberfläche des entsprechenden auszustellenden bzw. anzulehnenden Geräts) ist dabei eine von der lateralen Seite (oder Seitenkante) des entsprechenden Holms der entsprechenden Leiter aufgespannte laterale Ebene zu verstehen (Neigungsmessung nach vorne und hinten, also Anstellwinkelmonitoring), oder auch eine von einer Front des entsprechenden Holms oder beider Holme der Leiter aufgespannte frontale Ebene (Winkelmessung zur Seite, also Monitoring eines hier so genannten Lateralwinkels bzw. einer Umkippgefahr zur Seite). Die jeweilige Leiter kann mit mehreren in unterschiedlichen Ebenen angeordneten Anstellmaßvorrichtungen ausgestattet sein. Es ist zu verstehen, dass gemäß der vorliegenden Offenbarung vornehmlich auf eine Anordnung der Anstellmaßvorrichtung an einer lateralen Fläche/Ebene der Leiter Bezug genommen wird. Gleichwohl ist für den Fachmann erkennbar, dass die Funktionalität der Anstellmaßvorrichtung auch bei Anordnung auf anders ausgerichteten Oberflächen der Leiter sichergestellt werden kann, sei es bezüglich derselben Neigungsebene, sei es in einer weiteren Neigungsebene. Die Anstellmaßvorrichtung kann dafür auch vorrichtungstechnisch an bestimmte Leiteroberflächen angepasst werden, z.B. einen 90°-Winkel zwischen Verbundkante (bzw. Verbindungsfläche/Anlagefläche) und Referenzkammern bzw. Korpus aufweisen.

Als "Kenntlichmachen eines (Soll-)Anstellwinkelbereichs" ist dabei einerseits das Kenntlichmachen eines Soll-Anstellwinkelbereichs und andererseits auch eines/des (momentanen) Ist-Anstellwinkels zu verstehen; anders ausgedrückt: die Referenzkammern dienen der Kenntlichmachung des Soll-Anstellwinkelbereichs (insbesondere relativ zur Längserstreckungsrichtung der Leiter), und die (jeweilige) Referenzkugel dient der Kenntlichmachung eines/des (momentanen) Ist-Anstellwinkels; dabei beantwortet die Referenzkugel insbesondere auf ergonomisch optimierte und auf robuste Weise die Frage, ob der Ist-Anstellwinkel innerhalb des Soll-Anstellwinkelbereichs liegt. Hierdurch kann das korrekte sichere Aufstellen der Leiter und damit die Handhabung beträchtlich erleichtert werden und die (Arbeits-)Sicherheit erhöht werden.

Es ist zu verstehen, dass die relative Ausrichtung der Anstellmaßvorrichtung insbesondere relativ zur Längsachse der Leiter (also entlang eines Holms) für die winkelgetreue Wiedergabe des Soll-Anstellwinkelbereichs von großer Bedeutung ist; hierzu ist vorteilhaft vorgesehen, dass am Korpus bzw. Grundkörper der Anstellmaßvorrichtung wenigstens eine Verbundkante oder dergleichen Anschlag oder Formkontur vorgesehen ist. Dies ermöglicht auch ein exaktes Ausrichten insbesondere durch Anlegen an einer Längskante des Holms, oder an einer gleichwirkenden Kontur an der Leiter. Je nach Art der Befestigung/Integration der Anstellmaßvorrichtung in/an der Leiter kann der Fachmann jedoch auch abweichend davon eine bestimmte Art und Weise der relativen Winkel-Ausrichtung zur Positionierung der Anstellmaßvorrichtung vorgeben.

Für das Kenntlichmachen eines Lateralwinkels, also einer Kippgefahr in einer frontalen Ebene (E2), ist dabei bevorzugt ein deutlich engerer Toleranzbereich vorgesehen, d.h., eine/die dafür vorgesehene Anstellmaßvorrichtung mag mit vergleichbar langen/großen Referenzkammern ausgestattet sein, diese weisen jedoch einen größeren Krümmungsradius auf und/oder sind hinsichtlich des sichtbaren Anzeigebereichs, also hinsichtlich der Soll-Position der Referenzkugel, stärker eingegrenzt. Dies deshalb, da ein Kippen zur Seite bereits ab wenigen Grad Abweichung von der lotrechten Ausrichtung gefährlich wird. Insofern ist hier eine Genauigkeit von ± 1° ratsam bzw. implementierbar. Der Fachmann kann basierend auf der vorliegenden Offenbarung die relative Ausrichtung der wenigstens einen Referenzkammer und deren Toleranzbereich bzw. deren Krümmungsradius dafür anpassen, insbesondere zwecks Kenntlichmachung der lotrechten Ausrichtung und eines Toleranzbereichs von z.B. maximal ± 2° oder ± 3.°

Sofern gemäß der vorliegenden Offenbarung von Referenzkugel(n) gesprochen wird, so ist darunter synonym auch ein entsprechend gleichwirkendes Anzeigemittel zu verstehen, nicht notwendigerweise ein gegenständliches Anzeigemittel. Der Fachmann erkennt, dass die hier beschriebene Funktionalität einer Referenzkugel z.B. auch durch einen Lufteinschluss (Blase) erzielt werden kann, oder durch andere für das Anzeigen der Ausrichtung von Gegenständen vorbekannt verwendbare Mittel. Insofern ist die vorliegende Offenbarung nicht durch die Bezugnahme auf Referenzkugeln als solche beschränkt. Erwähnenswert ist jedoch, dass die hier beschriebenen Merkmalskombinationen im Zusammenhang mit den Referenzkugeln besonders vorteilhaft sind, z.B. hinsichtlich Robustheit und/oder leichter Erfassbarkeit der abzulesenden Information.

Personifizierte Begriffe, soweit sie hier nicht im Neutrum formuliert sind, können im Rahmen der vorliegenden Offenbarung alle Geschlechter betreffen.

Es ist zu verstehen, dass bei einer Ausgestaltung der Anstellmaßvorrichtung als Nachrüstoption das Verbinden mit der Leiter vorteilhaft einmalig irreversibel erfolgt, insbesondere um keine Fehlerquellen hinsichtlich der korrekten Ausrichtung der Referenzkammern zu generieren. Insbesondere können alle Arten von gängigen Anlegeleitern mittels der hier beschriebenen Anstellmaßvorrichtung ausgerüstet werden. Dabei kann die Anstellmaßvorrichtung auch im abgebauten/zusammengeklappten/zusammengeschobenen Zustand an der jeweiligen Leiter verbleiben, beeinträchtigt also nicht deren übliche Funktionsweise.

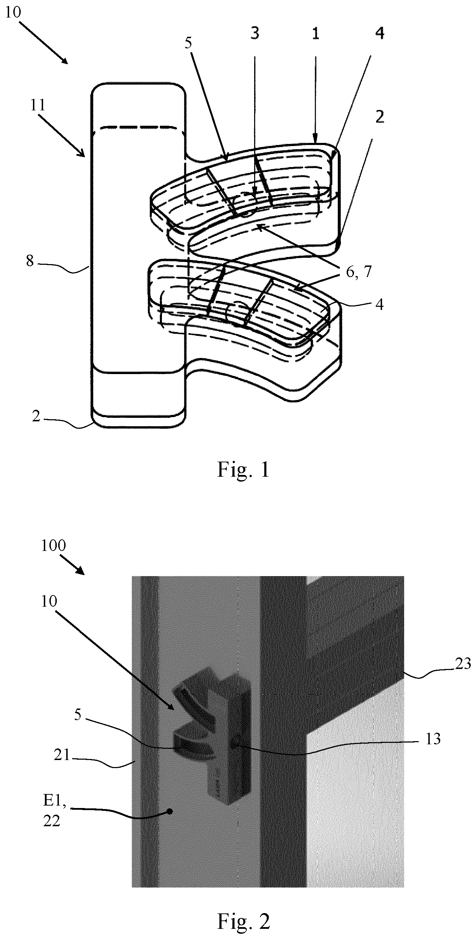

Die vorliegende Erfindung kann mit anderen Worten auch wie folgt beschrieben werden bzw. in den folgenden Kontext eingeordnet werden, insbesondere unter Bezugnahme auf Fig. 1: Bereitgestellt wird ein Anstellmaß für tragbare Leitern, basierend auf einer mobilen instationär verwendbaren Vorrichtung zur vertikalen Neigungsmessung, wobei auf den Holm einer tragbaren Leiter die mobile Leiteranstellmaßvorrichtung durch einen bevorzugt stoffschlüssigen Verbundhilfsstoff (Pos. 2), orthogonal zur absolut ebenen Oberfläche, oder parallel zum Leiterholm, befestigbar ist. Den Grundkörper bildet vorteilhaft ein Korpus (Pos. 1) mit zwei bevorzugt durch eine oder mehrere Kapillaren verbundenen Referenzkammern, wobei die Kapillare(n) z.B. über eine seitlich am Grundkörper angeordnete Stellschraube bzw. Abdichtschraube zugänglich ist/sind. In jeder der beiden Referenzkammern befindet sich eine Referenzkugel (Pos. 3). Die Kammern werden mit jeweils einer Sichtscheibe (Pos. 4) verschlossen bzw. verblendet. Mittels einer derartigen (Leiter- )Anstellmaßvorrichtung kann das Kenntlichmachen des Anstellwinkels dabei auch in beiden Richtungen (nach vorne und hinten) erleichtert bzw. optimiert werden. Anders ausgedrückt: Die Leiter muss nicht umgedreht werden bzw. muss nicht mit einer bestimmten Seite oder einem bestimmten der beiden freien Enden gegen das Gebäude oder dergleichen angelegt werden, um die Funktionalität der hier beschriebenen Anstellmaßvorrichtung nutzen zu können.

Tragbare Leitern üblicher Bauart sollen gemäß gültiger Vorschriften und Richtlinien im vorgesehenen Winkel am Anleiterobjekt (beispielsweise einem Bauwerk oder einem Baum, Geländer oder dergleichen) angestellt werden. Hierzu gehören auch jegliche Leitern, welche durch Personen mobil instationär transportiert und verwendet werden können, beispielsweise im Katastrophenschutz. Vorteil bieten diese Leitern innerhalb der freien Verwendung. Jedoch der große Fehlerspielraum für Anwender stellt den größten Nachteil dar. Ein falsch gewählter Anstellwinkel der Leiter kann schnell zu Rutschen oder Umkippen führen. Der Anstellwinkel kann zwar durch verbreitete organisatorische Maßnahmen, beispielsweise der Ellenbogenmethode, überprüft werden; nichtsdestotrotz kann es situationsbedingt insbesondere im Katastrophenschutz beim schnellen Arbeiten zu Fehlerquellen kommen. Ebenfalls geht ein hoher Fehlerbereich selbst bei diesen organisatorischen Maßnahmen einher. Zusätzlich ist auch zu berücksichtigen, dass die meisten Anwender diesen Anstellwinkel nicht kennen oder zumindest fehlerhaft anwenden/implementieren (insbesondere da es nicht trivial ist, geometrische Verhältnisse bei in der Größe skalierten Abmessungen und/oder in unwegsamem Gelände exakt abzuschätzen). Es resultiert leider in vielen Situationen ein vergleichbar hohes Risiko eines Leiterunfalls insbesondere durch Sturz. Zu den meist gravierenden Auswirkungen gehören neben der kurzweiligen Arbeitsunfähigkeit auch eine langfristige Arbeitsunfähigkeit (Arbeitsrente) oder gar der Tod der verunfallten Person. Diese Nachteile können basierend auf den hier erläuterten Merkmalen überwunden werden.

Es ist zu verstehen, dass die hier beschriebene Anstellmaßvorrichtung besonders einfach auf/an Holmen vorgesehen werden kann, welche eine plane/ebene Oberfläche aufweisen, insbesondere in Kombination mit wenigstens einer Querschnittsprofilkante. Diese Ausgestaltung ist bei gebräuchlichen Leiterprofilen sehr häufig anzutreffen; auch insofern ist die vorliegende Offenbarung diesbezüglich besonders ausführlich und spezifisch. Gleichwohl kann die Anstellmaßvorrichtung auch für konvexe oder konkave Oberflächengeometrien von Leitern konzipiert sein, sei es mittels entsprechend konturierter Unterseite der Grundfläche, sei es unter Verwendung eines Adapterzwischenstücks. Basierend auf der vorliegenden Offenbarung kann der Fachmann die geometrische (Kupplungs-)Schnittstelle zur Leiter auch anwendungsspezifisch auslegen bzw. optimieren. Beispielsweise kann der Grundkörper auch mit einer Vierkantkontur ausgestaltet oder zumindest ausgestattet werden, welche über einen Holm geschoben werden kann, insbesondere im den Grundkörper möglichst fester/dauerhafter (insbesondere formschlüssig) mit dem Holm verbinden zu können, insb. in einer Anordnung in einem Höhenabschnitt zwischen zwei Sprossen, in welcher der Grundkörper nicht versehentlich gelöst oder abgetreten werden könnte.

In einer vorteilhaften Ausgestaltung weist der (äußere) Korpus (Pos. 1) der Anstellmaßvorrichtung dabei zwei z.B. durch Fräsen gebildete Kammern auf, welche jeweils eine Referenzkugel (Pos. 3) aufnehmen. Diese Kammern können z.B. über wenigstens eine seitlich befindliche/zugängliche Kapillaröffnung (Einlass) mit technischem Fluid (z.B. Öl) befüllt werden. Mittels des Fluids wird die Roll- bzw. Verlagerungsgeschwindigkeit der Referenzkugel eingebremst, insbesondere durch Gegenkräfte des Fluids (Viskosität). Um die Rollreibung zwischen Referenzkugel und Korpus zu reduzieren, können vorteilhaft feine Rauheiten erzeugt werden, vorteilhaft durch extraktives Fräsen. Die innere Kreisbahn der Kammer zeigt bei bestimmungsgemäßer Anordnung der Anstellmaßvorrichtung an der Leiter nach oben (Krümmungsmittelpunkt oberhalb der Kammer). Da beide Neigungsrichtungen einer Leiter bedient werden sollen, ist das Leiteranstellmaß mit zwei Referenzkammern ausgestattet. Ein Verwechseln mit den Dimensionen oben und unten ist nicht möglich, da Anlegeleitern eine vordefinierte Richtung besitzen. Die Referenzkugel bewegt sich auf der Bogenbahn des Korpus in Abhängigkeit der Neigung, begünstigt durch die wirkende Schwerkraft. Diese Kugeln weisen keine Wirkung auf magnetische oder starke Kohäsionskräfte auf. Die Sichtscheiben (Pos. 4) schließen die Baugruppe des Korpus und der Referenzkugel. Diese besteht idealerweise aus einem leicht matten, blendfreien und Witterungsbeständigem Acrylglas, dass starken Beanspruchungen standhält. Das Glas ist bruchfest und gegen Vergilbung geschützt. Damit eine unverwechselbare Statusanzeige (richtig/ falsch) abgelesen werden kann, ist lediglich der Anstellbereich durchsichtig. Der restliche Bereich ist milchig bearbeitet. Die Sichtscheibe ist so konstruiert, sodass wenn die Kugel durch einen infinitesimal Teil sichtbar ist, steht die Leiter bereits an den Grenzen des Anstellbereiches. Hierdurch ist höchste Sicherheit im Umgang mit dem Leiteranstellmaß gegeben und ermöglicht eine einfache und fehlerfreie Handhabung. Die Sichtscheiben werden durch Druck in die obere Kammerfläche verpresst. Zusätzlich kann eine dünne Klebstoffschicht aufgetragen werden, um Feuchtigkeit und damit Verdunstungen zu vermeiden. Das gesamte mobile instationäre Leiteranstellmaß wird stoffschlüssig mit einem Verbundhilfsstoff (Pos. 2) an den Leiterholm geklebt. Eine technisch vorteilhafte Anordnung kann unter Bezugnahme insbesondere auf die Merkmale in Punkt 1 nachvollzogen werden. Ein beispielhaftes Ausführungsbeispiel der Erfindung wird auch anhand der Fig. 1 erläutert, welche Merkmale der Anstellmaßvorrichtung bzw. der Vorrichtung zur vertikalen Neigungsmessung illustriert. Dabei werden folgende Bezugszeichen verwendet: 1 äußerer Korpus, 2 stoffschlüssiger Verbundhilfsstoff, 3 Referenzkugel, 4 Sichtscheibe.

Der folgenden Liste können nach Punkten gelistete Merkmale im Zusammenhang mit der vorliegenden Erfindung entnommen werden.
1. Anstellmaß für tragbare Leitern, mittels mobiler instationärer Vorrichtung zur vertikalen Neigungsmessung, wobei auf den Holm einer tragbaren Leiter das mobile Leiteranstellmaß durch einen stoffschlüssigen Verbundhilfsstoff (Pos. 2), orthogonal zur absolut ebenen Oberfläche, oder parallel zum Leiterholm, befestigt ist. Den Grundkörper bildet bevorzugt ein Korpus (Pos. 1) mit zwei durch Kapillaren verbundenen Referenzkammern. In jeder der beiden Referenzkammern ist eine Referenzkugel (Pos. 3) angeordnet. Diese Kammern sind/werden vorteilhaft mit jeweils einer Sichtscheibe (Pos. 4) verschlossen.
2. Sichtscheibe gemäß Punkt 1, wobei ein durchsichtiger, im Idealfall leicht matter, blendfreier und witterungsbeständiger, sowie bruchfester und gegen Vergilbung geschützter Werkstoff eine Einsicht in die jeweilige Kammer ermöglicht. Anders ausgedrückt: Die Sichtscheibe kann aus einem solchen Material bestehen.
3. Referenzkugel gemäß Punkt 1, wobei diese aus einem vor magnetischen und starken Kohäsionskräften geschützten bzw. diesbezüglich inerten Werkstoff besteht. Die Oberfläche der Kugel ist, zum Schutz vor starken Rollwiderständen, vorteilhaft glatt und von groben Rauheiten befreit.
4. Äußerer Korpus gemäß Punkt 1, wobei dieser äußere Korpus zwei Referenzkammern, radial angeordnet, aufweist. Die Verbundkante bzw. Anlagefläche des Leiteranstellmaß (bzw. der Anstellmaßvorrichtung) ist vorteilhaft gerade (linienförmig) und erstreckt sich vorteilhaft vollständig eben/plan. Dies liefert auch gute Robustheit.
5. Stoffschlüssiger Verbundhilfsstoff gemäß Punkt 1, wobei eine doppelseitige Verbundfunktion des Verbundhilfsstoffs das Leiteranstellmaß mit der tragbaren Leiter verbindet. Die Form und Abmessungen des Verbundhilfsstoffs entsprechen vorteilhaft der unteren Form des Leiteranstellmaßes, können also geometrisch deckungsgleich ausgestaltet sein.
6. Referenzbereich der Sichtscheibe gemäß Punkt 2, wobei der gültige Anstellbereich dem durchsichtigen Referenzbereich entspricht. Ein außerhalb davon liegender Bereich ist vorteilhaft undurchsichtig ausgestaltet bzw. bearbeitet.
7. Radiusgrenzwerte der Referenzkammern gemäß Punkt 4, wobei Form und Abmessungen der Sichtscheibe entsprechen. Diese setzen sich vorteilhaft aus dem zutreffenden Referenzbereich und einer zusätzlichen Referenztoleranz zusammen.
8. Verbindungstechnik der Einzelkomponenten äußerer Korpus und Sichtscheibe gemäß Punkt 1, wobei die Bauteile form- oder stoffschlüssig miteinander verbunden sind.

Dabei ist zu verstehen, dass der Verbundhilfsstoff hier als bevorzugt adhäsiv wirkender Stoff beschrieben wird, insbesondere um eine nachträgliche fehlerhafte Fehlausrichtung der Anstellmaßvorrichtung ausschließen zu können; gleichwohl kann der Verbundhilfsstoff auch in Ausgestaltung als form-/kraftschlüssig wirkender Verbundhilfsstoff bereitgestellt sein/werden. Beachtlich ist dabei, dass die Anstellmaßvorrichtung auch in einer in die Leiter integrierten Ausgestaltung bereitgestellt werden kann; bezüglich auch dieser Varianten wird hier allgemeiner von Integrationsmitteln gesprochen, beispielsweise wenn die Anstellmaßvorrichtung in eine Aufnahmekavität eingesetzt ist/wird, beispielsweise auch bei einer Leiter aus Vollmaterial, z.B. einer Holzleiter.

Beispielsweise wird die Anstellmaßvorrichtung mittels doppelseitig klebender Klebefolie an der gewünschten (Leiter-)Oberfläche befestigt, vorteilhaft mit der gesamten Unterseite des Grundkörpers anliegend an der (Leiter-)Oberfläche.

Aus dieser zusammenfassenden Darstellung geht insbesondere auch hervor, dass die vorliegende Erfindung dazu beiträgt, menschliche Fehleinschätzungen bei der Handhabung manuell anstellbarer Leitern und dergleichen Geräten zu minimieren und auch ein Ablesen einer Winkelinformation zu erleichtern.

Gemäß einem Ausführungsbeispiel weist die Anstellmaßvorrichtung einen Grundkörper auf, welcher einen Korpus mit den beiden Referenzkammern bildet, insbesondere einen Korpus mit miteinander verbundenen Referenzkammern, beispielsweise einen Korpus aus Aluminium oder aus Kunststoff.

Dies ermöglicht auch eine exakt vordefinierte Ausrichtung der beiden Referenzkammern relativ zueinander, so dass durch bestimmungsgemäße Anordnung/Ausrichtung der Anstellmaßvorrichtung an der Leiter (insbesondere bezüglich der Längsrichtung der Leiter) der Verlauf der Referenzkammern und damit der (bevorzugt gekrümmte) mögliche Bewegungspfad für die jeweilige Referenzkugel vordefiniert ist/wird. Es ist zu verstehen, dass der Grundkörper ein einstückig-integrales Bauteil sein kann, durch welches insbesondere im Katastrophenschutzbereich oder Bereichen vergleichbarer Beanspruchung eine besonders hohe Robustheit sichergestellt werden kann, z.B. bei integraler Ausführung in Aluminium (z.B. spanend hergestelltes einstückiges Aluminiumteil, insbesondere Frästeil), und bei welchem optional auch ein kostenoptimiertes und dennoch zumindest einigermaßen robustes Design z.B. aus Kunststoff realisierbar ist (z.B. Spritzgussteil), beispielsweise für Privatanwender insbesondere für den Heimwerkerbereich. Das Ablesen der Referenzkammer(n) kann dabei z.B. auch durch eine Pfeilbeschriftung oder dergleichen weiter erleichtert werden.

Vorteilhaft ist der Grundkörper und damit auch die gesamte Anstellmaßvorrichtung vergleichsweise flach dimensioniert, insbesondere flacher als 1cm, insbesondere ca. 8mm. Dies begünstigt eine noch sicherere/robustere Integration bzw. Befestigung insbesondere an Leiterholmen.

Es ist zu verstehen, dass die relative Ausrichtung der Anstellmaßvorrichtung relativ zur Längsrichtung des Holms z.B. allein mittels einer/der so genannten Verbundkante am Grundkörper erfolgen kann; wahlweise können zusätzliche Montage-/Befestigungshilfsmittel (oder entsprechende damit zusammenwirkende Hilfswerkzeuge) wie z.B. Distanzklötze oder Adapterzwischenstücke vorgesehen sein, beispielsweise zur Kupplung an eine sehr spezifische (nicht-ebene) Oberflächengeometrie der Leiter.

Gemäß einem Ausführungsbeispiel sind die Referenzkammern jeweils durch eine beispielsweise form- oder stoffschlüssig angebrachte Sichtscheibe mit durchsichtigem Referenzbereich witterungsbeständig derart abgeschottet, dass ein/der Soll-Anstellwinkelbereich im Referenzbereich angezeigt wird, insbesondere ein Soll-Anstellwinkelbereich über 10°, und ein vom Soll-Anstellwinkelbereich abweichender Anstellwinkelbereich verdeckt ist oder zumindest undurchsichtiger angezeigt wird. auf. Dies liefert weitere nicht zuletzt ergonomische Vorteile insbesondere im Zusammenhang mit einer Sichtprüfung. Der Soll-Anstellwinkelbereich von 10° ist/wird dabei bevorzugt zwischen 65° und 75° Neigung definiert. Es hat sich gezeigt, dass dieser Winkelbereich einerseits ausreichend Spielraum für die handhabende Person lässt, andererseits nicht zu breit ist, so dass der Zweck einer optimalen Ausrichtung der Leiter pragmatisch gut erfüllt werden kann.

Vorteilhaft ist die jeweilige Sichtscheibe aus einem massiven Material ausgebildet, z.B. lasergeschnitten aus transparentem Material, wobei insbesondere in die bestimmungsgemäß außenliegende Oberfläche der Sichtscheibe vorteilhaft eine milchig erscheinende Struktur eingebracht, z.B. eingebrannt ist. Dies kann auch die Wahrnehmbarkeit der durch die Referenzkugel wiedergegebenen Information verbessern und auch Reflexionen minimieren.

Gemäß einem Ausführungsbeispiel ist die jeweilige Referenzkugel schwimmend in der jeweiligen Referenzkammer gelagert, insbesondere in Öl. Dies kann die Wiedergabe bzw. Kenntlichmachung der Winkelinformation weiter verbessern und damit das visuelle Erfassen weiter erleichtern. Insbesondere wird die jeweilige Referenzkugel nicht aufgeschüttelt/aufgerüttelt, sondern bewegt sich gravitationskraftgetrieben gedämpft optimiert zügig in die Position entsprechend der Ist-Winkelstellung (momentan tiefste Position der jeweiligen Referenzkammern). Es ist zu verstehen, dass eine Dämpfung der Bewegung der Referenzkugel je nach Anwendungszweck vorteilhaft sein kann oder eher unterbunden werden sollte. Insbesondere im Katastrophenschutz kann es wichtig sein, dass das Kenntlichmachen der momentanen räumlichen Ausrichtung der Leiter so schnell wie möglich erfolgen soll, d.h., ein Abdämpfen der Rollbewegung der Referenzkugel sollten wenn dann nur auf moderate Weise erfolgen, d.h., ein/der Dämpfungswiderstand sollte minimal sein. Der Fachmann kann ausgehend von der vorliegenden Offenbarung eine je nach Anwendungsfall und gewählter Materialpaarungen optimale Implementierung vornehmen, wahlweise auch ganz ohne dämpfendes technisches Fluid (Lagerung der Kugel in einer allenfalls luftgefüllten Referenzkammer).

Gemäß einem Ausführungsbeispiel ist die jeweilige Referenzkugel nicht-magnetisch. Dies begünstigt auch eine Minimierung äußerer Fehlerquellen z.B. durch elektronische Geräte und/oder irgendeinen sonstigen natürlichen oder technischen Magnetismus.

Gemäß einem Ausführungsbeispiel ist die jeweilige Referenzkugel zumindest im Wesentlichen inert bezüglich Kohäsionskräften. Dies trägt ebenfalls zu einem möglichst fehlerfreien rein gravitationskraftgetriebenen Positionieren der jeweiligen Referenzkugel bei.

Gemäß einem Ausführungsbeispiel ist die jeweilige Referenzkugel rollwiderstandsminimiert ausgestaltet, insbesondere mit glatter Oberfläche. Dies begünstigt auch ein schnelles Einnehmen der tiefsten Position.

Gemäß einem Ausführungsbeispiel besteht die jeweilige Referenzkugel aus Kunststoff. Dies liefert auch einen guten Kompromiss aus inerten Eigenschaften und Kosten.

Gemäß einem Ausführungsbeispiel ist die jeweilige Referenzkugel in einer Signalfarbe hervorgehoben, beispielsweise in gelb, rot, orange, insbesondere eine Neon-Farbe. Es hat sich gezeigt, dass die farbliche Hervorhebung der Referenzkugel in der ansonsten eher durch gedeckte Farbtöne charakterisierten Umgebung (Grundkörper, Korpus) die Ablesbarkeit besonders spürbar verbessert. Zwar wurden im Rahmen der vorliegenden Erfindung auch Überlegungen angestellt, die Referenzkugel fluoreszierend/leuchtend auszugestalten, jedoch hat sich gezeigt, dass ein Leuchtschimmer insbesondere im Zusammenhang mit der erfindungsgemäß gewünschten einfachen klaren Ablesbarkeit hinsichtlich einer Ja/Nein-Aussage eher kontraproduktiv wirken könnte, denn ein Leuchtschimmer könnte es erschweren, festzustellen, ob die Referenzkugel tatsächlich bereits im Toleranzbereich liegt oder nicht. Insbesondere in diesem Kontext ist die farbliche Hervorhebung deutlich zu favorisieren, nicht zuletzt da die im Katastrophenschutz agierenden Personen üblicherweise ohnehin alle mit Lampen bzw. Lichtquellen ausgestattet sind.

Gemäß einem Ausführungsbeispiel ist die Anstellmaßvorrichtung aus den folgenden Komponenten gebildet: Grundkörper mit Korpus und dadurch gebildete Referenzkammern, Sichtscheiben, Referenzkugeln, Integrationsmittel bzw. Verbundhilfsstoff; wobei der Korpus bevorzugt eine vollständig ebene Unterseite aufweist. Ein derartiger Aufbau basierend auf einer vergleichsweise geringen Anzahl von Teilen liefert auch den Vorteil einer robusten Ausgestaltung. Die Anstellmaßvorrichtung kann als ein Bauteil bzw. eine Baugruppe bereitgestellt werden, und soll durch den Anwender nicht auseinandergenommen werden. Als Integrationsmittel ist hier allgemein ein Mittel zum Integrieren oder Verbinden der Anstellmaßvorrichtung in die bzw. mit der Leiter zu verstehen, je nachdem, ob die Anstellmaßvorrichtung zusammen mit der Leiter bereitgestellt werden soll oder als Nachrüstbauteil/-gruppe bereitgestellt werden soll.

Gemäß einem Ausführungsbeispiel erstrecken sich die Referenzkammern in jeweils individueller Ausrichtung radial von einem/dem mit dem Holm verbindbaren oder integral daran ausgestalteten Grundkörper der Anstellmaßvorrichtung, insbesondere mit bogenförmigem Aufnahmebereich für die jeweilige Referenzkugel. Hierdurch kann nicht zuletzt auch die Sichtbarkeit noch weiter verbessert werden, also das visuelle Erfassen der Relativposition der jeweiligen Referenzkugel. Der Aufnahmebereich definiert dabei den jeweiligen Bewegungspfad der entsprechenden Referenzkugel.

Gemäß einem Ausführungsbeispiel dienen die Referenzkammern der Kenntlichmachung des wenigstens einen Soll-Anstellwinkelbereichs, nämlich eine/die erste Referenzkammer der Kenntlichmachung des Soll-Anstellwinkelbereichs bei einer ersten Längsausrichtung oder Neigungsrichtung der Leiter und eine/die zweite Referenzkammer bei einer zweiten Längsausrichtung oder Neigungsrichtung der Leiter, wobei die jeweilige Referenzkugel der Kenntlichmachung eines/des momentanen Ist-Anstellwinkels dient. Dies vereinfacht nicht zuletzt auch eine zeiteffiziente manuelle Korrektur bzw. Justage des Anstellwinkels. Hieran ist erkennbar, dass die hier beschriebene Redundanz der Referenzkammern mit deren unterschiedlicher Ausrichtung/Erstreckung am Grundkörper bzw. Korpus auch dazu dient, an nur einer Montage-/Integrationsstelle der Leiter das Kenntlichmachen des Soll-Anstellwinkelbereichs für die jeweils möglichen Aufstell-Konfigurationen der Leiter zu ermöglichen. Anders ausgedrückt: Die Handhabung der Leiter, sei sie nun mit dem einen freien Ende nach unten oder nach oben ausgerichtet, oder sei sie nun in die eine oder in die andere Richtung geneigt, kann ohne Beeinträchtigung freibleibend wie gewohnt erfolgen, und der wenigstens eine Anstellwinkel(-bereich) kann unabhängig davon an derselben Stelle (Befestigungs- /Integrationspunkt) an der Leiter abgelesen werden, bevorzugt lateral an wenigstens einem Holm der Leiter, wahlweise auch an beiden Holmen der Leiter (beispielsweise auch an vier oder sogar acht unterschiedlichen Befestigungs-/Integrationspunkten, falls besonders sichere Ausgestaltung gewünscht wird; insbesondere lateral innen und/oder außen am jeweiligen Holm oben und unten im Bereich der freien Enden der Leiter). Dies verbessert noch weiter die gute Ergonomie und kann insbesondere im Zusammenhang mit schnellem, hektischem Arbeiten (z.B. auf dem Gebiet des Katastrophenschutzes) einen spürbaren Beitrag zur (Arbeits-)Sicherheit liefern.

Gemäß einem Ausführungsbeispiel ist die Anstellmaßvorrichtung eingerichtet, auf einem Holm einer/der Leiter durch den Verbundhilfsstoff befestigt zu sein/werden, wobei der Verbundhilfsstoff vorteilhaft mit doppelseitiger/beidseitiger Verbundfunktion an einem/dem Grundkörper der Anstellmaßvorrichtung vorgesehen ist, welcher geometrisch an die Außenkontur des Holms angepasst ist, also z.B. eben (ebener Holm) oder konkav (konvexer Holm) ausgestaltet ist. Dies erleichtert nicht zuletzt auch ein Nachrüsten der Anstellmaßvorrichtung basierend auf einfacher Verbindungstechnik und in einem vorteilhaft großen Flächenbereich.

Gemäß einem Ausführungsbeispiel ist ein/der Referenzbereich der jeweiligen Referenzkammer durch Radiusgrenzwerte in den Soll-Anstellwinkelbereich und in wenigstens einen nicht-tolerierbaren Anstellwinkelbereich unterteilt. Dies erleichtert auch eine Einschätzung durch den jeweiligen Nutzer, ob eine Umpositionierung bzw. Neuausrichtung der Leiter erforderlich ist.

Gemäß einem Ausführungsbeispiel weist die Anstellmaßvorrichtung einen Grundkörper auf, welcher die beiden Referenzkammern in der Höhenrichtung überragt und vorteilhaft über die gesamte Höhenerstreckung eine Anlagekante und/oder Verbindungsfläche zur Kupplung/Verbindung mit dem Holm bildet, insbesondere bei seitlicher Anordnung an einer lateralen Fläche bzw. Ebene des Holms. Gemäß einem Ausführungsbeispiel stellt der Grundkörper eine sich mindestens über 10cm erstreckende Anlagekante und/oder Verbindungsfläche zur Kupplung/Verbindung mit dem Holm bereit, insbesondere in Längserstreckungsrichtung über mindestens 10cm. Dies begünstigt jeweils auch ein sehr exaktes Ausrichten der Anstellmaßvorrichtung relativ zur Leiter, insbesondere relativ zur Längserstreckungsrichtung der Leiter.

Die zuvor genannte Aufgabe wird auch gelöst durch eine anstellbare Leitervorrichtung (hier synonym auch als Leiter bezeichnet) mit wenigstens einer form-/kraftschlüssig daran befestigten oder integral (einstückig oder mehrteilig) damit bereitgestellten oder stoffschlüssig damit verbundenen Anstellmaßvorrichtung gemäß der vorliegenden Offenbarung, wobei mittels der wenigstens einen Anstellmaßvorrichtung zumindest ein Soll-Anstellwinkelbereich kenntlichgemacht wird und wahlweise auch ein Soll-Lateralwinkelbereich, wobei die Leiter bevorzugt manuell handhabbar ist. Hierdurch ergeben sich zuvor genannte Vorteile, insbesondere in Hinblick auf erleichterte und schnellere Handhabung beim möglichst sicheren Anstellen bzw. Positionieren von Leitern. Dabei können auch mehrere Anstellmaßvorrichtungen an der Leiter vorgesehen sein, z.B. im Bereich eines jeweiligen Endes (oben/unten). Vorteilhaft sind die Referenzkammern dabei bestimmungsgemäß derart angeordnet, dass ein/der Krümmungsmittelpunkt der jeweiligen Bogenbahn oberhalb der Kammer liegt, d.h., die Referenzkammern weisen eine in Blickrichtung nach oben konkave Bogenkontur auf, insbesondere in Kreissegmentform, insbesondere über einen Winkel von mindestens 20°, vorteilhaft mindestens 25°.

An der Leiter, insbesondere innen und/oder außen am jeweiligen Holm, kann z.B. ein Winkel von zumindest annähernd 90° ausgebildet sein, oder eine Längskante oder dergleichen, an welchem/welcher die Anstellmaßvorrichtung bzw. deren Grundkörper in exakter Längsausrichtung zur Anlage gebracht werden kann. Für eine Ausgestaltung der Leiter mit ausschließlich konvex nach außen gewölbten oder ausschließlich ebenen Oberflächenkonturen kann der Grundkörper an dessen Unterseite auch eine Längskante aufweisen (hier auch als Verbundkante beschrieben), wahlweise in Kombination mit einem Vorsprung oder Absatz. Hierdurch wird auch bei derartigen Holmprofilen die Anordnung und korrekte (Längs-)Ausrichtung der Anstellmaßvorrichtung vereinfacht.

Vorteilhaft weist der jeweilige Leiterholm ein im Querschnitt doppelt-T-förmiges oder doppel-U-förmiges Profil auf. Vorteilhaft ist die Anstellmaßvorrichtung dabei innerhalb einer von den T- bzw. U-Abschnitten des Querschnittsprofils umgrenzten Querschnittsbreite angeordnet, d.h., die Anstellmaßvorrichtung ist im montierten bzw. integrierten Zustand flacher als die Außenkanten des Querschnittsprofils. Dies kann eine noch robustere Befestigung bzw. Integration der Anstellmaßvorrichtung sicherstellen.

Die zuvor genannte Aufgabe wird auch gelöst durch ein Verfahren gemäß dem entsprechenden nebengeordneten Verfahrensanspruch, nämlich durch ein Herstellungsverfahren zum Herstellen einer nachrüstbar montierbaren Anstellmaßvorrichtung gemäß der vorliegenden Offenbarung, mit den Schritten:
- Bereitstellen (bzw. Ausbilden) eines Grundkörpers oder wenigstens eines dafür vorgesehenen Materials;
- Ausbilden wenigstens einer an einer Kante oder Ebene ausgerichtet montierbaren Anlage-/Verbindungsfläche und eines Korpus am oder durch den Grundkörper insbesondere durch Guss, umformende Formgebung und/oder Materialabtrag, beispielsweise durch Fräsen oder Spritzguss;
- Ausbilden von wenigstens zwei Referenzkammern am Korpus insbesondere durch Guss, umformende Formgebung und/oder Materialabtrag;
- Ausstatten der jeweiligen Referenzkammer mit Referenzkugel und Sichtscheibe und wahlweise auch mit technischem Fluid;
- Vorsehen wenigstens eines Typs Verbundhilfsstoffs bzw. Integrationsmittels zumindest an der wenigstens einen Anlage-/Verbindungsfläche, vorteilhaft an einer/der gesamten Unterseite des Grundkörpers;
wobei die Anstellmaßvorrichtung dabei vorteilhaft aus den folgenden Komponenten aufgebaut bereitgestellt wird: Grundkörper mit Korpus und dadurch gebildete Referenzkammern, Sichtscheiben, Referenzkugeln, Integrationsmittel bzw. Verbundhilfsstoff. Hierdurch ergeben sich zuvor genannte Vorteile, insbesondere auch in Hinblick auf die Option, die Anstellmaßvorrichtung wahlweise für den Privatbereich oder den professionellen Bereich optimiert auszugestalten, insbesondere auch in Hinblick auf die Option, die Anstellmaßvorrichtung wahlweise als montierbares Nachrüstteil oder als bereits integral mit der entsprechenden Leiter bereitgestellte Komponente optimiert auszugestalten.

Wahlweise kann ein vollachsiges CNC-Materialbearbeitungsverfahren (insbesondere Fräsverfahren) implementiert sein/werden. Wahlweise kann ein teil- oder vollautomatisiertes Spritzgussverfahren implementiert sein/werden. Letzteres bietet neben großen Kostenvorteilen auch eine hohe Variabilität hinsichtlich Material- und Farbauswahl. Beispielsweise ist zumindest der Grundkörper einstückig (spritz-)gegossen. Wahlweise kann zumindest der Grundkörper oder auch die gesamte Vorrichtung 3D-gedruckt sein, z.B. aus Kunststoff oder aus Metall.

Vorteilhaft ist/wird der Grundkörper mit den darin ausgestalteten Referenzkammern entweder durch spanenden Materialabtrag oder durch Spritzguss hergestellt. Hierdurch können jeweils besonders viele der hier genannten Vorteile synergetisch realisiert werden.

Die zuvor genannte Aufgabe wird auch gelöst durch eine Anstellmaßvorrichtung gemäß der vorliegenden Offenbarung, aufweisend einen metallischen Grundkörper hergestellt durch Materialabtrag oder Guss oder 3D-Druck oder aufweisend einen Grundkörper aus Kunststoff hergestellt durch Spritzguss oder 3D-Druck, insbesondere hergestellt durch ein Herstellungsverfahren gemäß der vorliegenden Offenbarung. Hierdurch lassen sich zuvor genannte Vorteile realisieren, insbesondere jeweils auch in Hinblick auf entweder qualitativ besonders hochwertige und robuste Ausgestaltung oder kostengünstige Ausgestaltung (Privatanwenderbereich).

Die zuvor genannte Aufgabe wird auch gelöst durch Verwendung einer nachrüstbaren Anstellmaßvorrichtung, insbesondere einer Anstellmaßvorrichtung gemäß der vorliegenden Offenbarung, zum Kenntlichmachen wenigstens eines Ist-Anstellwinkels in Bezug auf wenigstens einen Soll-Anstellwinkelbereich an einer anstellbaren Leiter (visueller Soll-Ist-Abgleich durch einen Nutzer), insbesondere an einer Anlegeleiter für den Katastrophenschutz, mittels zwei von außen visuell zugänglicher Referenzkammern jeweils mit einer darin gavitationskraftgetrieben verlagerbaren Referenzkugel jeweils zum Kenntlichmachen des Anstellwinkels, wobei die Anstellmaßvorrichtung auf einer Oberfläche der Leiter, insbesondere auf einem Holm der Leiter (vorteilhaft auf einer inneren Lateralfläche), durch einen Verbundhilfsstoff oder durch Form-/Kraftschluss befestigt wird, nämlich mit den Referenzkammern ausgerichtet mittels eines in einer Ausrichtung orthogonal oder parallel zur Oberfläche bzw. Längserstreckung der Leiter an der Leiter befestigten Grundkörper der Anstellmaßvorrichtung, wobei die Oberfläche eine plane/ebene Oberfläche ist, nämlich entweder in einer von einer lateralen Seite des Holms aufgespannten lateralen Ebene oder in einer von einer Front des Holms oder beider Holme aufgespannten frontalen Ebene, wobei die zwei Referenzkammern parallel zu der entsprechenden Oberfläche angeordnet sind. Hierdurch lassen sich zuvor genannte Vorteile realisieren, insbesondere in Hinblick auf gute Anwendbarkeit der Anstellmaßvorrichtung auch für bereits bestehende bzw. eingesetzte Leitern, insbesondere zwecks erleichterter und schnellerer Handhabung beim möglichst sicheren Anstellen bzw. Positionieren der Leiter.

Die zuvor genannte Aufgabe wird auch gelöst durch Verwendung einer Anstellmaßvorrichtung, insbesondere einer Anstellmaßvorrichtung gemäß der vorliegenden Offenbarung, zum Kenntlichmachen wenigstens eines Ist-Anstellwinkels in Bezug auf wenigstens einen Soll-Anstellwinkelbereich an einer anstellbaren Leiter (visueller Soll-Ist-Abgleich durch einen Nutzer) mittels zwei von außen visuell zugänglicher Referenzkammern jeweils mit einer darin gavitationskraftgetrieben verlagerbaren Referenzkugel jeweils zum Kenntlichmachen des Anstellwinkels, wobei die Anstellmaßvorrichtung in mit der Leiter, insbesondere mit einem Holm der Leiter, integraler Ausgestaltung bereitgestellt wird, insbesondere in einer auf den Holm aufgesteckten/aufgeschobenen Ausgestaltung oder stoffschlüssig damit verbundenen Ausgestaltung (z.B. Aluminiumschweißung), bevorzugt in einer Anordnung zwischen zwei Sprossen, nämlich mit den Referenzkammern jeweils in einer Ausrichtung orthogonal oder parallel zu einer Oberfläche der Leiter, wobei die Oberfläche eine plane/ebene Oberfläche ist, nämlich entweder in einer von einer lateralen Seite des Holms aufgespannten lateralen Ebene oder in einer von einer Front des Holms oder beider Holme aufgespannten frontalen Ebene, wobei die zwei Referenzkammern parallel zu der entsprechenden Oberfläche angeordnet sind. Hierdurch lassen sich zuvor genannte Vorteile realisieren, insbesondere in Hinblick auf das Bereitstellen von bereits mit wenigstens einer Anstellmaßvorrichtung ausgestatteten Leitern, insbesondere entlang der Wertschöpfungskette der Leiterherstellung, insbesondere zwecks erleichterter und schnellerer Handhabung beim möglichst sicheren Anstellen bzw. Positionieren der Leiter.

Zusammenfassung: Beim manuellen Errichten und Anstellen von Leitern z.B. an Gebäuden ist es von großer Bedeutung, einen vergleichsweise engen Anstellwinkelbereich einzuhalten, insbesondere zur Minimierung des Risikos, dass die jeweilige Leiter seitlich verrutscht, nach unten wegrutscht oder sogar seitlich oder nach hinten umkippt. Erfahrungsgemäß ist es für die handhabenden Personen nicht nur im Privatbereich, sondern auch z.B. im Katastrophenschutz insbesondere stressbedingt unter Zeitdruck nicht immer einfach, den vorteilhaft sicheren Anstellwinkelbereich zu treffen bzw. nachzujustieren. Die vorliegende Erfindung betrifft eine Anstellmaßvorrichtung insbesondere für anstellbare Leitern, wobei die Anstellmaßvorrichtung zwei von außen visuell zugängliche Referenzkammern jeweils mit einer darin gavitationskraftgetrieben verlagerbaren Referenzkugel zum Kenntlichmachen zumindest eines Soll-Anstellwinkelbereichs aufweist, wobei die Anstellmaßvorrichtung eingerichtet ist, auf einer/der Leiter, insbesondere auf einem Holm einer/der Leiter, durch einen Verbundhilfsstoff oder durch Form-/Kraftschluss befestigt zu sein/werden oder in mit der Leiter, insbesondere mit dem Holm, integraler Ausgestaltung bereitgestellt zu werden, jeweils in einer Ausrichtung orthogonal oder parallel zur (entsprechend für die Anordnung gewählten) Oberfläche der Leiter. Hierdurch wird die manuelle Handhabung insbesondere von Leitern vereinfacht und sicherer. Ferner betrifft die Erfindung auch eine entsprechend ausgestattete Leiter und ein Herstellungsverfahren für eine solche Anstellmaßvorrichtung.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
**Figur 1** in einer perspektivischen Ansicht eine Anstellmaßvorrichtung gemäß einem Ausführungsbeispiel;
**Figur 2** in einer perspektivischen Seitenansicht eine an einer lateralen Oberfläche eines Leiterholms bestimmungsgemäß zum Kenntlichmachen eines momentanen Anstellwinkels angeordnete Anstellmaßvorrichtung gemäß Ausführungsbeispielen;
**Figuren 3A, 3B** in einer frontalen Seitenansicht und in einer seitlichen Seitenansicht eine Leiter mit einer bestimmungsgemäß zum Kenntlichmachen eines momentanen Anstellwinkels daran angeordneten Anstellmaßvorrichtung gemäß Ausführungsbeispielen;
**Figur 4** **und** **Figur 5** in einer seitlichen Seitenansicht und in einer frontalen Seitenansicht jeweils eine mit wenigstens einer Anstellmaßvorrichtung gemäß Ausführungsbeispielen ausgestatteten Leiter in Verwendung an einem Gebäude;
**Figur 6** in einer Schnittansicht ein beispielhaftes Querschnittsprofil eines Leiterholms, welches vorteilhaft zur Anordnung wenigstens einer Anstellmaßvorrichtung gemäß Ausführungsbeispielen ausgestaltet ist;
**Figur 7** in schematischer Darstellung Verfahrensschritte gemäß Ausführungsbeispielen;

### DETAILLIERTE BESCHREIBUNG DER FIGUREN

Die Erfindung wird zunächst unter allgemeiner Bezugnahme auf alle Bezugszeichen und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Anstellmaßvorrichtung 10 insbesondere für mobile Anlegeleitern, bzw. eine damit ausgestattete Leiter 20, wobei die Anstellmaßvorrichtung 10 zwei von außen visuell zugängliche Referenzkammern 5 jeweils mit einer darin gavitationskraftgetrieben verlagerbaren Referenzkugel 3 zum Kenntlichmachen zumindest eines Soll-Anstellwinkelbereichs aufweist, wobei die Anstellmaßvorrichtung 10 eingerichtet ist, auf einer/der Leiter, insbesondere auf einem Holm 21 einer/der Leiter, durch einen Verbundhilfsstoff 2 (bzw. Integrationsmittel) oder durch Form-/Kraftschluss befestigt zu sein/werden oder in mit der Leiter 20, insbesondere mit dem Holm 21, integraler Ausgestaltung ausgerichtet bereitgestellt zu werden. Dabei bildet vorteilhaft ein Grundkörper 11 einen Korpus 1 für die jeweilige Referenzkammer 5. Eine Sichtscheibe 4 schottet die jeweilige Referenzkammer 5 von der Umgebung ab. Die jeweilige Referenzkammer 5 definiert eine bevorzugt kreissegmentförmige Bogenbahn 6 für die gravitationskraftgetriebene Positionierung der jeweiligen Referenzkugel 3, liefert also einen bogenförmigen bzw. kreissegmentförmigen Aufnahmebereich 7, welcher die Referenzkugel 3 insbesondere kanalartig umgrenzt. Am Grundkörper 11 ist wenigstens eine Verbundkante bzw. Verbindungsfläche 8 (Anlagefläche) zur Kuppeln/Verbinden der Anstellmaßvorrichtung 10 mit der gewünschten Oberfläche der Leiter, insbesondere des Holms vorgesehen, insbesondere mit dort vorgesehenem Verbundhilfsstoff 2 (z.B. doppelseitig haftende Klebefolie). Am Grundkörper kann ferner wenigstens ein Zugang zur entsprechenden Referenzkammer vorgesehen sein, insbesondere eine Stellschraube bzw. eine Abdichtschraube 13, zum optionalen Zuführen von technischem Fluid.

Eine anstellbare Leiter 20 (z.B. Feuerwehr-Anlegeleiter) weist üblicherweise zwei sich in Längsrichtung (x) erstreckende Holme 21 und zahlreiche Sprossen 23 (Erstreckung in Querrichtung) auf. Die hier beschriebene wenigstens eine zur Ausstattung einer solchen Leiter 30 vorgesehene Anstellmaßvorrichtung 10 ist vorteilhaft an wenigstens einer Befestigungs-/Integrationsstelle 25 angeordnet, insbesondere an einer Oberfläche 22 wenigstens eines der Holme, insbesondere an einer lateralen Innen- oder Außenfläche des Holms. Eine derart ausgestattete Leitervorrichtung 100 erleichtert die Handhabung und das korrekte Aufstellen und liefert dabei ein hohes Maß an Sicherheit und (Arbeits-)Schutz.

Im Folgenden werden Besonderheiten der Erfindung unter Bezugnahmen auf einzelne Figuren bzw. Ausführungsbeispiele erläutert.

In **Fig. 1** ist eine Anstellmaßvorrichtung 10 in beispielhafter Ausgestaltung dargestellt. Der Grundkörper 11 ist einstückig und bildet den Korpus 1 für die beiden Referenzkammern 5.

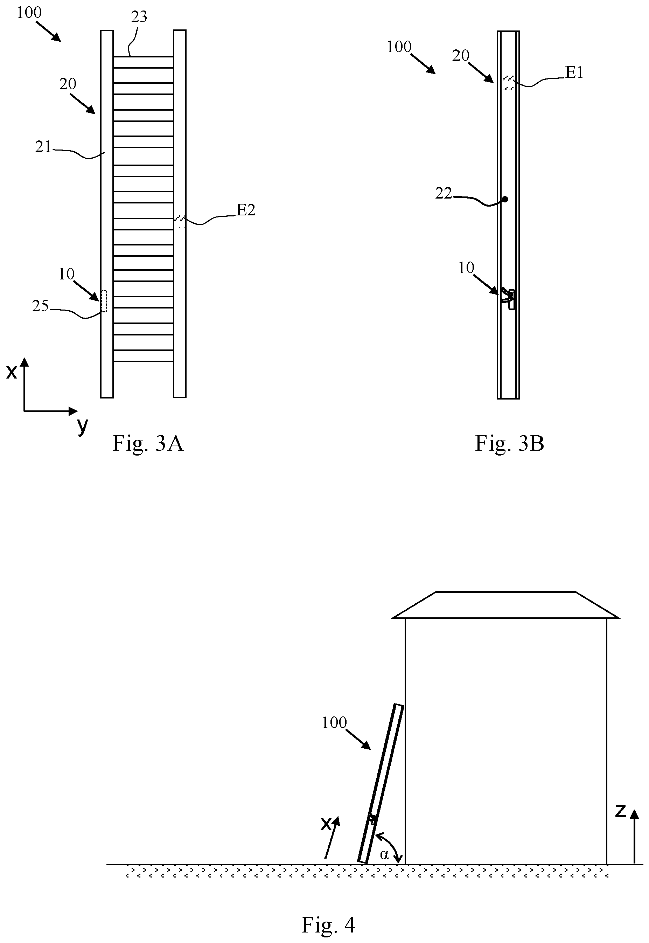

In **Fig. 2** ist eine Anstellmaßvorrichtung 10 in bestimmungsgemäßer Anordnung an einem Holm 21 einer Leiter 20 gezeigt; eine solche Kombination von Anstellmaßvorrichtung 10 und Leiter 20 bildet eine hier so bezeichnete Leitervorrichtung 100, wie näher in den Figuren 3A, 3B, 4, 5 erläutert.

In den **Fig. 3** sind zwei Anwendungssituationen veranschaulicht. In **Fig. 3A** ist das Neigungswinkelmonitoring (Winkel α) veranschaulicht. In **Fig. 3B** ist das Lateralwinkelmonitoring (Winkel β) veranschaulicht. Für den jeweiligen Winkel ist jeweils wenigstens eine Anstellmaßvorrichtung 10 in der entsprechenden Ebene an der Leiter angeordnet.

Aus den Fig. 2 und Fig. 3B ist ersichtlich, dass die Ausrichtung der Anstellmaßvorrichtung relativ zur Längserstreckungsrichtung x des entsprechenden Holms wahlweise auch durch ein Montagehilfsmittel vereinfacht werden kann, welches zwischen einen parallelen Abschnitt des Holms, z.B. einem seitlich vorstehenden Holmprofilabschnitt, und der Verbundkante bzw. Anlageseite der Anstellmaßvorrichtung gelegt wird, sozusagen als Distanzstück. Hierdurch kann auch eine vorteilhafte Befestigungsposition innerhalb der zur Verfügung stehenden Tiefe bzw. Breite der entsprechenden Leiteroberfläche zwecks Optimierung der Sichtbarkeit der Referenzkammern vorgegeben werden.

In **Fig. 4** ist eine beispielhafte Anwendung im Zusammenhang mit dem Erfassen des Neigungswinkels illustriert. Aus Fig. 4 geht auch der Neigungswinkel α hervor, wie dargestellt insbesondere ca. im Bereich von 75°, also soeben an der oberen Toleranzgrenze (d.h., noch steiler sollte die Leiter nicht angestellt sein/werden).

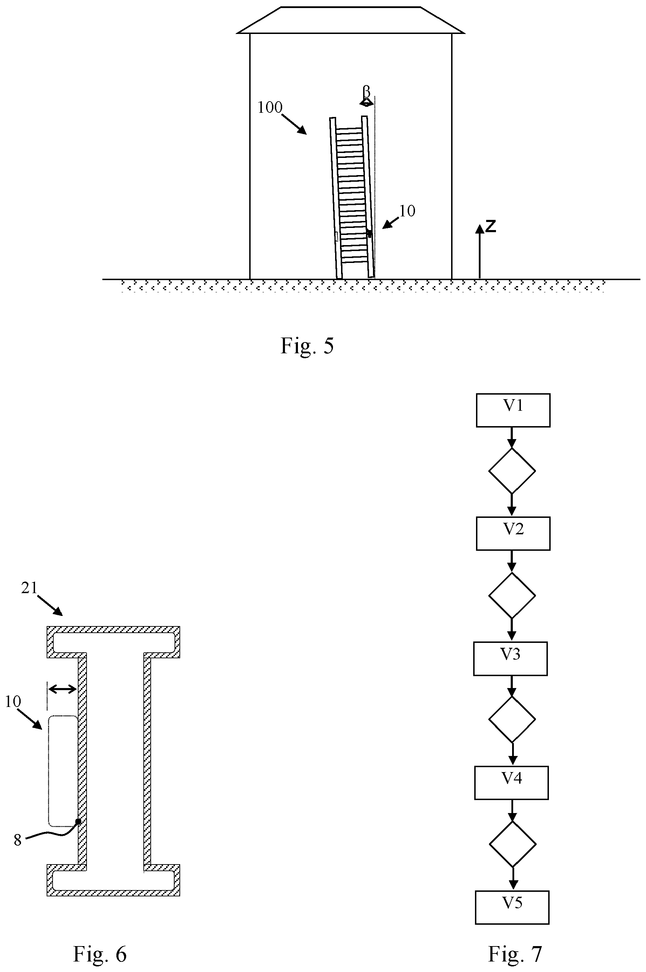

In **Fig. 5** ist eine beispielhafte Anwendung im Zusammenhang mit dem Erfassen des Lateralwinkels illustriert. Aus Fig. 5 geht auch der (momentane) Lateralwinkel β hervor, wie dargestellt insbesondere ca. im Bereich von 3° oder 4°, also bereits über der empfehlenswerten oberen Toleranzgrenze von max. 1° oder 2° (d.h., die Leiter müsste unbedingt weiter lotrecht ausgerichtet sein/werden).

In den Fig. 3A und 3B bezeichnen die Bezugsziffer E1 die laterale Ebene und die Bezugsziffer E2 die frontale Ebene; die hier beschriebene Anstellmaßvorrichtung kann wahlweise in einer der beiden Ebenen angeordnet sein/werden. In den Fig. 3A und 4 bezeichnen die Bezugsziffern x, y die Längs- und Querrichtung, jeweils relativ bezogen auf die Leitergeometrie, und die Bezugsziffer z bezeichnet die Höhenrichtung (absolut), entsprechend der vertikalen Raumrichtung. In den Fig. 4 und 5 bezeichnen der Winkel α einen/den (momentanen) Anstellwinkel und der Winkel β einen/den (momentanen) Lateralwinkel der aufgestellten Leiter.

Aus Fig. 5 geht hervor, dass die hier beschriebene Anstellmaßvorrichtung auch in unterschiedlichen Ebenen an der Leiter angeordnet sein/werden kann (entweder in der einen oder in der anderen Ebene), so dass nicht nur ein Anstell-/Neigungswinkel, sondern auch ein seitlicher Kippwinkel β (Lateralwinkel) kenntlich gemacht werden kann. Je nachdem, welche Winkeltoleranz in seitlicher Richtung als zulässig kenntlich gemacht sein/werden soll, kann die Anstellmaßvorrichtung dabei in winkeliger Ausrichtung relativ zur Längserstreckungsrichtung des entsprechenden Holms ausgerichtet sein.

In **Fig. 6** ist ein beispielhaftes Querschnittsprofil eines Leiterholms gezeigt: Durch eine Doppel-T-Form bzw. Doppel-U-Form wird ein Bereich aufgespannt, in welchem die Anstellmaßvorrichtung 10 vertieft/versenkt angeordnet werden kann, wodurch sie noch besser vor äußerer Einwirkung geschützt ist. Die Anstellmaßvorrichtung ist/baut in bestimmungsgemäßer Anordnung an der Holmoberseite vorteilhaft flacher als eine von den T- bzw. U-Abschnitten des Querschnittsprofils umgrenzte Querschnittsbreite (angedeutet durch den Doppelpfeil in Fig. 6), also flacher als die Außenkanten des Querschnittsprofils, insbesondere flacher als 1cm. Üblicherweise entspricht das Leiterholmprofil einem Hohlprofil oder einem aus mehreren Hohlprofilen gebildeten Profil (wie dargestellt). Gleichwohl kann der Holm auch aus massivem Material bereitgestellt werden/sein, zumindest in einem bestimmten Höhenabschnitt. Speziell auch für diesen Fall kann die Anstellmaßvorrichtung auch in eine im Material gebildete Kavität integriert sein.

In **Fig. 7** sind Schritte eines vorteilhaften Herstellungsverfahrens veranschaulicht: erster Schritt **V1** Bereitstellen des Grundkörpers oder dafür vorgesehenen Materials; zweiter Schritt **V2** Ausbilden wenigstens einer Anlage-/Verbindungsfläche und eines Korpus; dritter Schritt **V3** Ausbilden von wenigstens zwei Referenzkammern am Korpus; vierter Schritt **V4** Ausstatten der Referenzkammern mit Referenzkugel und Sichtscheibe; fünfter Schritt **V5** Vorsehen wenigstens eines Typs Verbundhilfsstoffs bzw. Integrationsmittels. Zwischen den einzelnen Verfahrensschritten ist ein rautenförmiger Punkt dargestellt, welcher einen optionalen Zwischenschritt symbolisiert, beispielsweise zum Individualisieren bzw. zum anwendungsspezifischen Optimieren der Art und Weise der Herstellung der hier beschriebenen Anstellmaßvorrichtung. Anders ausgedrückt: Der Fachmann kann z.B. Nachbearbeitungsvorgänge, z.B. ein Entgraten, oder dergleichen Zwischenschritte nach einem jeweiligen Schritt vorsehen.

### Bezugszeichenliste

- 1: Korpus
- 2: Integrationsmittel, z.B. stoffschlüssiger Verbundhilfsstoff
- 3: Referenzkugel
- 4: Sichtscheibe
- 5: Referenzkammer
- 6: Bogenbahn
- 7: bogenförmiger bzw. kreissegmentförmiger Aufnahmebereich
- 8: Verbundkante bzw. Verbindungsfläche (Anlagefläche zur Kuppeln/Verbinden mit dem Holm)
- 10: Anstellmaßvorrichtung insbesondere für mobile Leitern
- 11: Grundkörper
- 13: Stellschraube bzw. Abdichtschraube (Zugang zu Referenzkammer/n)
- 20: anstellbare Leiter
- 21: Holm (Erstreckung in Längsrichtung)
- 22: Oberfläche des Holms, insbesondere laterale Fläche des Holms
- 23: Sprosse (Erstreckung in Querrichtung)
- 25: Befestigungs-/Integrationsstelle an der Leiter
- 100: anstellbare Leitervorrichtung umfassend wenigstens eine Anstellmaßvorrichtung
- E1: laterale Ebene
- E2: frontale Ebene
- V1: erster Schritt: Bereitstellen des Grundkörpers oder dafür vorgesehenen Materials
- V2: zweiter Schritt: Ausbilden wenigstens einer Anlage-/Verbindungsfläche und eines Korpus
- V3: dritter Schritt: Ausbilden von wenigstens zwei Referenzkammern am Korpus
- V4: vierter Schritt: Ausstatten der Referenzkammern mit Referenzkugel und Sichtscheibe
- V5: fünfter Schritt: Vorsehen wenigstens eines Typs Verbundhilfsstoffs bzw. Integrationsmittels
- x, y: Längs- und Querrichtung, jeweils relativ, bezogen auf die Leitergeometrie
- z: Höhenrichtung (absolut), entsprechend der vertikalen Raumrichtung
- α: Anstellwinkel
- β: Lateralwinkel

## Patentansprüche

1. Anstellmaßvorrichtung (10) insbesondere für anstellbare Leitern (20),
wobei die Anstellmaßvorrichtung (10) zwei von außen visuell zugängliche Referenzkammern (5) jeweils mit einer darin gavitationskraftgetrieben verlagerbaren Referenzkugel (3) jeweils zum Kenntlichmachen zumindest eines Soll-Anstellwinkelbereichs aufweist,
**dadurch gekennzeichnet, dass** die Anstellmaßvorrichtung (10) eingerichtet ist, auf einer/der Leiter (20), insbesondere auf einem Holm (21) einer/der Leiter (20), durch einen Verbundhilfsstoff (2) oder durch Form-/Kraftschluss befestigt zu sein/werden oder in mit der Leiter (20), insbesondere mit dem Holm (21), integraler Ausgestaltung ausgerichtet bereitgestellt zu werden, nämlich jeweils in einer Ausrichtung orthogonal oder parallel zu einer Oberfläche (22) der Leiter (20),
wobei die Oberfläche (22) eine plane/ebene Oberfläche ist, nämlich entweder in einer von einer lateralen Seite des Holms aufgespannten lateralen Ebene (E1) oder in einer von einer Front des Holms oder beider Holme aufgespannten frontalen Ebene (E2), wobei die zwei Referenzkammern (5) parallel zu der entsprechenden Oberfläche (22) angeordnet sind.

2. Anstellmaßvorrichtung (10) nach Anspruch 1, wobei die Anstellmaßvorrichtung (10) einen Grundkörper (11) aufweist, welcher einen Korpus (1) mit den beiden Referenzkammern (5) bildet, insbesondere einen Korpus mit miteinander verbundenen Referenzkammern, beispielsweise einen Korpus aus Aluminium oder aus Kunststoff, insbesondere einen vorteilhaft flachen Grundkörper flacher als 1cm, insbesondere ca. 8mm.

3. Anstellmaßvorrichtung (10) nach einem der vorhergehenden Ansprüche, wobei die Referenzkammern (5) jeweils durch eine beispielsweise form- oder stoffschlüssig angebrachte Sichtscheibe (4) mit durchsichtigem Referenzbereich witterungsbeständig derart abgeschottet sind, dass ein/der Soll-Anstellwinkelbereich im Referenzbereich angezeigt wird, insbesondere ein Soll-Anstellwinkelbereich über 10°, und ein vom Soll-Anstellwinkelbereich abweichender Anstellwinkelbereich verdeckt ist oder zumindest undurchsichtiger angezeigt wird.

4. Anstellmaßvorrichtung (10) nach einem der vorhergehenden Ansprüche, wobei die jeweilige Referenzkugel (3) schwimmend in der jeweiligen Referenzkammer (5) gelagert ist, insbesondere in Öl; und/oder wobei die jeweilige Referenzkugel (3) nicht-magnetisch ist; und/oder wobei die jeweilige Referenzkugel (3) zumindest im Wesentlichen inert bezüglich Kohäsionskräften ist; und/oder wobei die jeweilige Referenzkugel (3) rollwiderstandsminimiert ausgestaltet ist; und/oder wobei die jeweilige Referenzkugel (3) aus Kunststoff besteht; und/oder wobei die jeweilige Referenzkugel (3) in einer Signalfarbe hervorgehoben ist, beispielsweise in gelb, rot, orange.

5. Anstellmaßvorrichtung (10) nach einem der vorhergehenden Ansprüche, wobei die Anstellmaßvorrichtung (10) aus den folgenden Komponenten gebildet ist: Grundkörper (11) mit Korpus (1) und dadurch gebildete Referenzkammern (5), Sichtscheiben (4), Referenzkugeln (3), Integrationsmittel, insbesondere Verbundhilfsstoff (2); wobei der Korpus (1) bevorzugt eine vollständig ebene Unterseite aufweist.

6. Anstellmaßvorrichtung (10) nach einem der vorhergehenden Ansprüche, wobei sich die Referenzkammern (5) in jeweils individueller Ausrichtung radial von einem/dem mit dem Holm (21) verbindbaren oder integral daran ausgestalteten Grundkörper (11) der Anstellmaßvorrichtung (10) erstrecken, insbesondere mit bogenförmigem Aufnahmebereich (7) für die jeweilige Referenzkugel (3); und/oder wobei die Referenzkammern (5) der Kenntlichmachung des wenigstens einen Soll-Anstellwinkelbereichs dienen, nämlich eine/die erste Referenzkammer (5) der Kenntlichmachung des Soll-Anstellwinkelbereichs bei einer ersten Längsausrichtung oder Neigungsrichtung der Leiter (20) und eine/die zweite Referenzkammer (5) bei einer zweiten Längsausrichtung oder Neigungsrichtung der Leiter (20), und wobei die jeweilige Referenzkugel (3) der Kenntlichmachung eines/des momentanen Ist-Anstellwinkels dient.

7. Anstellmaßvorrichtung (10) nach einem der vorhergehenden Ansprüche, wobei die Anstellmaßvorrichtung (10) eingerichtet ist, auf einem Holm (21) einer/der Leiter (20) durch den Verbundhilfsstoff (2) befestigt zu sein/werden, wobei der Verbundhilfsstoff (2) vorteilhaft mit doppelseitiger/beidseitiger Verbundfunktion an einem/dem Grundkörper (11) der Anstellmaßvorrichtung (10) vorgesehen ist, welcher geometrisch an die Außenkontur des Holms (21) angepasst ist.

8. Anstellmaßvorrichtung (10) nach einem der vorhergehenden Ansprüche, wobei ein/der Referenzbereich der jeweiligen Referenzkammer (5) durch Radiusgrenzwerte in den Soll-Anstellwinkelbereich und in wenigstens einen nicht-tolerierbaren Anstellwinkelbereich unterteilt ist.

9. Anstellmaßvorrichtung (10) nach einem der vorhergehenden Ansprüche, wobei die Anstellmaßvorrichtung (10) einen Grundkörper (11) aufweist, welcher die beiden Referenzkammern (5) in der Höhenrichtung (z) überragt und vorteilhaft über die gesamte Höhenerstreckung eine Anlagekante und/oder Verbindungsfläche (8) zur Kupplung/Verbindung mit dem Holm (21) bildet, insbesondere bei seitlicher Anordnung an einer lateralen Fläche des Holms (21); und/oder wobei der Grundkörper (11) eine sich mindestens über 10cm erstreckende Anlagekante und/oder Verbindungsfläche (8) zur Kupplung/Verbindung mit dem Holm (22) bereitstellt, insbesondere in Längserstreckungsrichtung über mindestens 10cm.

10. Anstellmaßvorrichtung (10) nach einem der Ansprüche 1 bis 9, aufweisend einen metallischen Grundkörper (11) hergestellt durch Materialabtrag oder Guss oder 3D-Druck oder aufweisend einen Grundkörper (11) aus Kunststoff hergestellt durch Spritzguss oder 3D-Druck.

11. Anstellbare Leitervorrichtung (20) mit wenigstens einer form-/kraftschlüssig daran befestigten oder integral damit bereitgestellten oder stoffschlüssig damit verbundenen Anstellmaßvorrichtung (10) nach einem der Ansprüche 1 bis 9, wobei mittels der wenigstens einen Anstellmaßvorrichtung (10) zumindest ein Soll-Anstellwinkelbereich kenntlichgemacht wird und wahlweise auch ein Soll-Lateralwinkelbereich, wobei die Leiter (20) bevorzugt manuell handhabbar ist.

12. Herstellungsverfahren zum Herstellen einer nachrüstbar montierbaren Anstellmaßvorrichtung (10) insbesondere für Leitern (20), nämlich einer Anstellmaßvorrichtung (10) nach einem der Ansprüche 1 bis 9, mit den Schritten:
- Bereitstellen eines Grundkörpers (11) oder wenigstens eines dafür vorgesehenen Materials;
- Ausbilden wenigstens einer an einer Kante oder Ebene ausgerichtet montierbaren Anlage-/Verbindungsfläche (8) und eines Korpus (1) am oder durch den Grundkörper (11) insbesondere durch Guss, umformende Formgebung und/oder Materialabtrag, beispielsweise durch Fräsen oder Spritzguss;
- Ausbilden von wenigstens zwei Referenzkammern (5) am Korpus (1) insbesondere durch Guss, umformende Formgebung und/oder Materialabtrag;
- Ausstatten der jeweiligen Referenzkammer (5) mit Referenzkugel (3) und Sichtscheibe (4) und wahlweise auch mit technischem Fluid;
- Vorsehen wenigstens eines Typs Integrationsmittels, insbesondere Verbundhilfsstoffs (2) zumindest an der wenigstens einen Anlage-/Verbindungsfläche (8), vorteilhaft an einer/der gesamten Unterseite des Grundkörpers (11);
wobei die Anstellmaßvorrichtung (10) dabei vorteilhaft aus den folgenden Komponenten aufgebaut bereitgestellt wird: Grundkörper (11) mit Korpus (1) und dadurch gebildete Referenzkammern (5), Sichtscheiben (4), Referenzkugeln (3), Integrationsmittel, insbesondere Verbundhilfsstoff (2).

13. Herstellungsverfahren nach dem vorhergehenden Verfahrensanspruch, wobei der Grundkörper (11) mit den darin ausgestalteten Referenzkammern (5) entweder durch spanenden Materialabtrag oder durch Spritzguss hergestellt ist/wird.

14. Verwendung einer nachrüstbaren Anstellmaßvorrichtung (10), insbesondere einer Anstellmaßvorrichtung (10) nach einem der Ansprüche 1 bis 9, zum Kenntlichmachen wenigstens eines Ist-Anstellwinkels in Bezug auf wenigstens einen Soll-Anstellwinkelbereich an einer anstellbaren Leiter (20), insbesondere an einer Anlegeleiter für den Katastrophenschutz, mittels zwei von außen visuell zugänglicher Referenzkammern (5) jeweils mit einer darin gavitationskraftgetrieben verlagerbaren Referenzkugel (3) jeweils zum Kenntlichmachen des Anstellwinkels, wobei die Anstellmaßvorrichtung (10) auf einer Oberfläche (22) der Leiter (20), insbesondere auf einem Holm (21) der Leiter (20), durch einen Verbundhilfsstoff (2) oder durch Form-/Kraftschluss befestigt wird, nämlich mit den Referenzkammern (5) ausgerichtet mittels eines in einer Ausrichtung orthogonal oder parallel zur Oberfläche oder zur Längserstreckung der Leiter (20) an der Leiter befestigten Grundkörper (11) der Anstellmaßvorrichtung (10), wobei die Oberfläche (22) eine plane/ebene Oberfläche ist, nämlich entweder in einer von einer lateralen Seite des Holms aufgespannten lateralen Ebene (E1) oder in einer von einer Front des Holms oder beider Holme aufgespannten frontalen Ebene (E2), wobei die zwei Referenzkammern (5) parallel zu der entsprechenden Oberfläche (22) angeordnet sind.

15. Verwendung einer Anstellmaßvorrichtung (10) nach einem der Ansprüche 1 bis 9 zum Kenntlichmachen wenigstens eines Ist-Anstellwinkels in Bezug auf wenigstens einen Soll-Anstellwinkelbereich an einer anstellbaren Leiter (20) mittels zwei von außen visuell zugänglicher Referenzkammern (5) jeweils mit einer darin gavitationskraftgetrieben verlagerbaren Referenzkugel (3) jeweils zum Kenntlichmachen des Anstellwinkels, wobei die Anstellmaßvorrichtung (10) in mit der Leiter (20), insbesondere mit einem Holm (21) der Leiter (20), integraler Ausgestaltung bereitgestellt wird, insbesondere in einer auf den Holm (21) aufgesteckten/aufgeschobenen Ausgestaltung oder stoffschlüssig damit verbundenen Ausgestaltung, bevorzugt in einer Anordnung zwischen zwei Sprossen (23), nämlich mit den Referenzkammern (5) jeweils in einer Ausrichtung orthogonal oder parallel zu einer Oberfläche (22) der Leiter (20), wobei die Oberfläche (22) eine plane/ebene Oberfläche ist, nämlich entweder in einer von einer lateralen Seite des Holms aufgespannten lateralen Ebene (E1) oder in einer von einer Front des Holms oder beider Holme aufgespannten frontalen Ebene (E2), wobei die zwei Referenzkammern (5) parallel zu der entsprechenden Oberfläche (22) angeordnet sind.

## Claims

1. Angle measurement device (10), in particular for adjustable ladders (20) which can be placed at different angles, wherein the angle measurement device (10) comprises two reference chambers (5) that are visually accessible from the outside, each being equipped with a reference ball (3) movable by gravitational force, each for indicating at least one range of a target angle of attack,
**characterised in that** the angle measurement device (10) is configured to be fixed to a/the ladder (20), in particular to a ladder spar (21) of a/the ladder (20), by means of a connecting agent (2) or by form/force fit, or to be provided in an integral design with the ladder (20), in particular with the ladder spar (21), namely in each case in an orientation orthogonal or parallel to a surface (22) of the ladder (20), wherein the surface (22) is a flat/plane surface, namely either in a lateral plane (E1) spanning from a lateral side of the ladder spar or in a frontal plane (E2) spanning from a front of the ladder spar or both ladder spars, wherein the two reference chambers (5) are arranged parallel to the corresponding surface (22).

2. Angle measurement device (10) according to claim 1, wherein the angle measurement device (10) comprises a base body (11) which forms a corpus (1) with the two reference chambers (5), in particular a corpus with interconnected reference chambers, for example a corpus made of aluminium or plastic, in particular an advantageously flat base body flatter than 1 cm, in particular approx. 8 mm.

3. Angle measurement device (10) according to one of the preceding claims, wherein the reference chambers (5) are each sealed off by a viewing pane (4) with a transparent reference area, which is attached in weather-resistant manner, for example, by a form-fitting or material-locking connection, such that a/the target angle of attack range is displayed in the reference area, in particular a target angle of attack range above and an angle of attack range deviating from the target angle of attack range is concealed or at least displayed in an opaque manner.

4. Angle measurement device (10) according to one of the preceding claims, wherein the respective reference ball (3) is mounted in a floating manner in the respective reference chamber (5), in particular in oil; and/or wherein the respective reference ball (3) is non-magnetic; and/or wherein the respective reference ball (3) is at least substantially inert with respect to cohesive forces; and/or wherein the respective reference ball (3) is designed to minimise rolling resistance; and/or wherein the respective reference ball (3) is made of plastic; and/or wherein the respective reference ball (3) is highlighted in a signal colour, for example in yellow, red or orange.

5. Angle measurement device (10) according to one of the preceding claims, wherein the angle measurement device (10) is formed from the following components: base body (11) with corpus (1) and reference chambers (5) formed thereby, viewing panes (4), reference balls (3), integration means, in particular connecting agent (2); wherein the corpus (1) preferably exhibits a completely flat underside.

6. Angle measurement device (10) according to one of the preceding claims, wherein the reference chambers (5) extend in individual alignment radially from a/the base body (11) of the angle measurement device (10) which can be connected to the ladder spar (21) or which is integrally formed thereon, in particular with an arcuate receiving area (7) for the respective reference ball (3); and/or wherein the reference chambers (5) serve to indicate the at least one target angle of attack range, namely a/the first reference chamber (5) for indicating the target angle of attack range in a first longitudinal orientation or inclination direction of the ladder (20) and a/the second reference chamber (5) in a second longitudinal orientation or inclination direction of the ladder (20), and wherein the respective reference ball (3) serves to identify a/the present actual angle of attack.

7. Angle measurement device (10) according to one of the preceding claims, wherein the angle measurement device (10) is configured to be/become fixed to a/the ladder spar (21) of the ladder (20) by means of the connecting agent (2), wherein the connecting agent (2) is advantageously provided with a double-sided composite function on both sides of a/the base body (11) of the angle measurement device (10), which is geometrically adapted to the outer contour of the ladder spar (21).

8. Angle measurement device (10) according to one of the preceding claims, wherein a/the reference area of the respective reference chamber (5) is divided by radius limits into the target angle of attack range and into at least one non-tolerable angle of attack range.

9. Angle measurement device (10) according to one of the preceding claims, wherein the angle measurement device (10) comprises a base body (11) which protrudes above the two reference chambers (5) in the height direction (z) and advantageously forms a contact edge and/or connecting surface (8) for coupling/connection to the ladder spar (21) over the entire height extension, in particular when arranged laterally on a lateral surface of the ladder spar (21); and/or wherein the base body (11) provides a contact edge and/or connecting surface (8) extending at least 10 cm for coupling/connection to the spar (22), in particular in the longitudinal direction over at least 10 cm.

10. Angle measurement device (10) according to one of claims 1 to 9, comprising a metal base body (11) processed by material removal or casting or 3D printing or comprising a base body (11) made of plastic processed by injection moulding or 3D printing.

11. Ladder device (20) which can be placed at different angles, with at least one angle measurement device (10) according to one of claims 1 to 9 fixed to the ladder device in a form-fitting/force-fitting manner or provided integrally therewith or connected to it in a material-locking manner, wherein at least one target angle of attack range is indicated by means of the at least one angle measurement device (10) and, optionally, also a target lateral angle range is indicated, wherein the ladder (20) is preferably manually operable.

12. Manufacturing method for processing a retrofittable angle measurement device (10) provided in particular for ladders (20), namely for processing an angle measurement device (10) according to one of claims 1 to 9, comprising the steps:
- providing a base body (11) or at least a material intended for the base body;
- forming at least one contact/connection surface (8) that can be mounted aligned with an edge or plane and forming a corpus (1) on or by the base body (11), in particular by casting, by forming by deformation and/or by material removal, for example by milling or injection moulding;
- forming at least two reference chambers (5) on the corpus (1), in particular by casting, by forming by deformation and/or by material removal;
- equipping the respective reference chamber (5) with a reference ball (3) and a viewing pane (4) and, optionally, with a technical fluid;
- providing at least one type of integration means, in particular a connecting agent (2), at least on the at least one contact/connection surface (8), advantageously on a/the entire underside of the base body (11);
wherein the angle measurement device (10) is advantageously provided based on a design based on the following components: base body (11) with corpus (1) and reference chambers (5) formed thereby, viewing panes (4), reference balls (3), integration means, in particular connecting agent (2).

13. Manufacturing method according to the preceding method claim, wherein the base body (11) with the reference chambers (5) provided therein is processed either by material removal or by injection moulding.

14. Use of a retrofittable angle measurement device (10), in particular an angle measurement device (10) according to one of claims 1 to 9, for indicating at least one actual angle of attack in relation to at least one target angle of attack range on an adjustable ladder (20), in particular on an adjustable ladder for disaster management/control purposes, by means of two reference chambers (5) that are visually accessible from the outside, each being equipped with a reference ball (3) movable by gravitational force, each for indicating the angle of attack, wherein the angle measurement device (10) is fixed to a surface (22) of the ladder (20), in particular to a ladder spar (21) of the ladder (20), by means of a connecting agent (2) or by form/force fit, namely with the reference chambers (5) aligned by means of a base body (11) of the angle measurement device (10) fixed to the ladder in an orientation orthogonal or parallel to the surface or to the longitudinal extension of the ladder (20), wherein the surface (22) is a flat/plane surface, namely either in a lateral plane (E1) spanning from a lateral side of the spar or in a frontal plane (E2) spanning from a front of the spar or both spars, wherein the two reference chambers (5) are arranged parallel to the corresponding surface (22).

15. Use of an angle measurement device (10) according to one of claims 1 to 9 for indicating at least one actual angle of attack in relation to at least one target angle of attack range on an adjustable ladder (20) by means of two reference chambers (5) that are visually accessible from the outside, each being equipped with a reference ball (3) movable by gravitational force, each for indicating the angle of attack, wherein the angle measurement device (10) is provided in an integral design with the ladder (20), in particular with a ladder spar (21) of the ladder (20), in particular in a design attached/slid onto the ladder spar (21) or connected to it in a material-locking manner, preferably in an arrangement between two ladder rungs (23), namely with the reference chambers (5) each in an orientation orthogonal or parallel to a surface (22) of the ladder (20), wherein the surface (22) is a flat/plane surface, namely either in a lateral plane (E1) spanning from a lateral side of the spar or in a frontal plane (E2) spanning from a front of the spar or both spars, wherein the two reference chambers (5) are arranged parallel to the corresponding surface (22).

## Revendications

1. Dispositif de mesure de l'angle d'attaque (10), en particulier pour des échelles ajustables (20) qui peuvent être placées à différents angles, le dispositif de mesure de l'angle d'attaque (10) comportant deux chambres de référence (5) visibles de l'extérieur, chacune avec une bille de référence (3) déplaçable par force de gravité, chacune pour indiquer au moins une plage d'angle d'attaque de consigne,
**caractérisé en ce que** le dispositif de mesure de l'angle d'attaque (10) est conçu pour être fixé sur la/une échelle (20), en particulier sur un longeron (21) de la/une échelle (20), à l'aide d'une substance auxiliaire de liaison (2) ou par complémentarité de forme/force, ou pour être disposé en alignement en liaison intégrale avec l'échelle (20), en particulier avec le longeron (21) de l'échelle, à savoir dans une orientation orthogonale ou parallèle à une surface (22) de l'échelle (20), la surface (22) étant une surface plate/plane, à savoir soit dans un plan latéral (E1) défini par un côté latéral du longeron, soit dans un plan frontal (E2) défini par une face avant du longeron ou des deux longerons, les deux chambres de référence (5) étant disposées parallèlement à la surface correspondante (22).

2. Dispositif de mesure de l'angle d'attaque (10) selon la revendication 1, le dispositif de mesure de l'angle d'attaque (10) comportant un corps de base (11) qui forme un corpus (1) avec les deux chambres de référence (5), en particulier un corpus avec des chambres de référence reliées entre elles, par exemple un corpus en aluminium ou en plastique, en particulier un corps de base avantageusement méplat, plus plat que 1 cm, en particulier environ 8 mm.

3. Dispositif de mesure de l'angle d'attaque (10) selon l'une des revendications précédentes, les chambres de référence (5) étant chacune compartimentées de manière résistante aux intempéries par une vitre de visualisation (4) attachée par exemple par complémentarité de forme ou par adhérence, avec une zone de référence transparente, de telle sorte que la/une plage d'angle d'attaque de consigne est indiquée dans la zone de référence, en particulier une plage d'angle d'attaque de consigne supérieure à et une plage d'angle d'attaque s'écartant de la plage d'angle d'attaque de consigne est masquée ou est au moins affichée de manière opaque.

4. Dispositif de mesure de l'angle d'attaque (10) selon l'une des revendications précédentes, dans lequel la bille de référence (3) respective est encastrée de manière flottante dans la chambre de référence (5) respective, en particulier dans de l'huile ; et/ou dans lequel la bille de référence respective (3) est non magnétique ; et/ou dans lequel la bille de référence respective (3) est au moins essentiellement inerte vis-à-vis des forces de cohésion ; et/ou dans lequel la bille de référence respective (3) est conçue pour minimiser la résistance au roulement ; et/ou dans lequel la bille de référence respective (3) consiste de la matière plastique ; et/ou dans lequel la bille de référence respective (3) est mise en évidence par une couleur de signalisation, par exemple en jaune, rouge, orange.

5. Dispositif de mesure de l'angle d'attaque (10) selon l'une des revendications précédentes, le dispositif de mesure de l'angle d'attaque (10) étant constitué des composants suivants : corps de base (11) avec corpus (1) et des chambres de référence (5) formées par celui-ci, vitres de visualisation (4), billes de référence (3), moyens d'intégration, en particulier une substance auxiliaire de liaison (2) ; le corpus (1) présentant de préférence une face inférieure complètement plane.

6. Dispositif de mesure de l'angle d'attaque (10) selon l'une des revendications précédentes, les chambres de référence (5) s'étendant chacune dans une orientation individuelle radialement à partir d'un/du corps de base (11) du dispositif de mesure de l'angle d'attaque (10), le corps de base pouvant être relié au longeron (21) ou étant formé en manière intégrale avec celui-ci, en particulier avec une zone de réception (7) en forme d'arc pour la bille de référence (3) correspondante ; et/ou dans lequel les chambres de référence (5) servent à indiquer la au moins une plage d'angle d'attaque de consigne, à savoir une/la première chambre de référence (5) pour indiquer la plage d'angle d'attaque de consigne dans une première orientation longitudinale ou direction d'inclinaison de l'échelle (20) et une/la deuxième chambre de référence (5) dans une deuxième orientation longitudinale ou direction d'inclinaison de l'échelle (20), et dans lequel la bille de référence respective (3) sert à identifier le/un angle d'attaque réel momentané.

7. Dispositif de mesure d'angle d'attaque (10) selon l'une des revendications précédentes, le dispositif de mesure d'angle d'attaque (10) étant conçu pour être fixé sur un longeron (21) de la/une échelle (20) à l'aide d'une substance auxiliaire de liaison (2), la substance auxiliaire de liaison (2) étant avantageusement prévue avec une fonction de liaison double face/bilatérale sur un/le corps de base (11) du dispositif de mesure de l'angle d'attaque (10), le corps de base étant adapté géométriquement au contour extérieur du longeron (21).

8. Dispositif de mesure de l'angle d'attaque (10) selon l'une des revendications précédentes, dans lequel une/la zone de référence de la chambre de référence respective (5) est divisée par des valeurs limites de rayon en une plage d'angle d'attaque de consigne et en au moins une plage d'angle d'attaque non tolérable.

9. Dispositif de mesure de l'angle d'attaque (10) selon l'une des revendications précédentes, le dispositif de mesure de l'angle d'attaque (10) comportant un corps de base (11) qui dépasse les deux chambres de référence (5) dans le sens de la hauteur (z) et qui avantageusement forme, sur toute la hauteur, un bord d'appui et/ou une surface de liaison (8) pour l'accouplement/la liaison avec le longeron (21), en particulier en cas de disposition latérale sur une surface latérale du longeron (21) ; et/ou dans lequel le corps de base (11) présente un bord d'appui et/ou une surface de liaison (8) s'étendant sur au moins 10 cm pour l'accouplement/la liaison avec le longeron (22), en particulier dans la direction longitudinale sur au moins 10 cm.

10. Dispositif de mesure de l'angle d'attaque (10) selon l'une des revendications 1 à 9, comprenant un corps de base métallique (11) fabriqué par enlèvement de matière ou par moulage ou par impression 3D, ou comprenant un corps de base (11) en plastique fabriqué par impression 3D ou par moulage par injection.

11. Dispositif d'échelle ajustable (20) pouvant être placé à différents angles, avec au moins un dispositif de mesure de l'angle d'attaque (10) selon l'une des revendications 1 à 9 fixé par complémentarité de forme/force ou prévu dans une configuration intégrale ou relié par adhérence, dans lequel au moins une plage d'angle d'attaque de consigne est indiquée au moyen du au moins un dispositif de mesure de l'angle d'attaque (10) et, au choix, aussi une plage d'angle latéral de consigne est indiquée, dans lequel l'échelle (20) peut de préférence être manipulée manuellement.

12. Procédé de fabrication pour fabriquer un dispositif de mesure de l'angle d'attaque (10) pouvant être monté a posteriori, en particulier pour des échelles (20), à savoir dispositif de mesure de l'angle d'attaque (10) selon l'une des revendications 1 à 9, le procédé comprenant les étapes suivantes :
- prévoir un corps de base (11) ou au moins d'un matériau prévu pour celui-ci ;
- former au moins une surface d'appui/de liaison (8) pouvant être montée alignée sur un bord ou un plan et former un corpus (1) sur ou par l'intermédiaire du corps de base (11), en particulier par moulage, formage par déformation et/ou enlèvement de matière, par exemple par fraisage ou moulage par injection ;
- former au moins deux chambres de référence (5) sur/dans le corpus (1), en particulier par moulage, formage par déformation et/ou enlèvement de matière ;
- équiper chaque chambre de référence (5) d'une bille de référence (3) et d'une vitre de visualisation (4) et, au choix, également d'un fluide technique ;
- prévoir au moins un type de moyen d'intégration, en particulier d'une substance auxiliaire de liaison (2), au moins sur la au moins une surface d'appui/de liaison (8), de préférence sur toute une/la face inférieure du corps de base (11) ;
le dispositif de mesure de l'angle d'attaque (10) étant avantageusement mis à disposition en constitution des composants suivants : corps de base (11) avec corpus (1) et chambres de référence (5) formées par celui-ci, vitres de visualisation (4), billes de référence (3), moyen d'intégration, en particulier substance auxiliaire de liaison (2).

13. Procédé de fabrication selon la revendication de procédé précédente, le corps de base (11) avec les chambres de référence (5) qui y sont formées étant fabriqué soit par enlèvement de matière par enlèvement de copeaux, soit par moulage par injection.

14. Utilisation d'un dispositif de mesure de l'angle d'attaque (10) pouvant être monté à posteriori, en particulier d'un dispositif de mesure de l'angle d'attaque (10) selon l'une des revendications 1 à 9, pour indiquer au moins un angle d'attaque réel par rapport à au moins une plage d'angles d'attaque de consigne pour une échelle ajustable (20), en particulier pour une échelle ajustable pour la protection contre les catastrophes, au moyen de deux chambres de référence (5) visibles de l'extérieur, chacune contenant une bille de référence (3) déplaçable par force de gravité, chacune pour indiquer l'angle d'attaque, le dispositif de mesure de l'angle d'attaque (10) étant fixé sur une surface (22) de l'échelle (20), en particulier sur un longeron (21) de l'échelle (20), par une substance auxiliaire de liaison (2) ou par complémentarité de forme/force, à savoir avec les chambres de référence (5) alignées au moyen d'un corps de base (11) du dispositif de mesure de l'angle d'attaque (10) fixé à l'échelle dans une orientation orthogonale ou parallèle à la surface ou à l'extension longitudinale de l'échelle (20), la surface (22) étant une surface plate/plane, à savoir soit dans un plan latéral (E1) défini par un côté latéral du longeron, soit dans un plan frontal (E2) défini par une face avant du longeron ou des deux longerons, les deux chambres de référence (5) étant disposées parallèlement à la surface correspondante (22).

15. Utilisation d'un dispositif de mesure de l'angle d'attaque (10) selon l'une des revendications 1 à 9 pour indiquer au moins un angle d'attaque réel par rapport à au moins une plage d'angles d'attaque de consigne pour une échelle ajustable (20) au moyen de deux chambres de référence (5) visibles de l'extérieur, chacune contenant une bille de référence (3) déplaçable par force de gravité, chacune pour indiquer l'angle d'attaque, le dispositif de mesure de l'angle d'attaque (10) étant prévu dans une configuration intégrale avec l'échelle (20), en particulier avec un longeron (21) de l'échelle (20), en particulier dans une configuration enfichée/emboîtée sur le longeron (21) ou reliée à celui-ci par adhérence, de préférence dans une disposition entre deux échelons (23), les chambres de référence (5) étant respectivement orientées orthogonalement ou parallèlement à une surface (22) de l'échelle (20), la surface (22) étant une surface plate/plane, à savoir soit dans un plan latéral (E1) défini par un côté latéral du longeron, soit dans un plan frontal (E2) défini par une face avant du longeron ou des deux longerons, les deux chambres de référence (5) étant disposées parallèlement à la surface correspondante (22).
